# EUROPEAN PATENT APPLICATION

(11) **EP 4 712 420 A1**
(43) Date of publication of application: **18.03.2026**
(21) Application number: 23936878.0
(22) Date of filing: 12.05.2023
(51) Int. Cl.: H04L 27/26

(54) **SIGNAL TRANSMISSION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Mewburn Ellis LLP
(86) International application number: PCT/CN2023/094064
(87) International publication number: WO 2024/234188

(57) **Abstract**

A signal transmission method and communication device are provided. The method includes the following. A first device receives a first reference signal at a target frequency domain position within a first bandwidth. The first reference signal is used for frequency offset estimation. The target frequency domain position includes one or more of a first frequency domain position and a second frequency domain position. The first frequency domain position is within a first frequency band in the first bandwidth, where a frequency of the first frequency band is higher than a frequency domain of each frequency band other than the first frequency band in the first bandwidth. The second frequency domain position is within a second frequency band in the first bandwidth, where a frequency of the second frequency band is lower than a frequency domain of each frequency band other than the second frequency band in the first bandwidth. In the disclosure, the first reference signal is transmitted at the first frequency domain position and/or the second frequency domain position within the first bandwidth. Compared with a frequency offset estimation method based on multiple filters, the method in the embodiments of the disclosure does not overly limit the number of filters in the first device, which helps to expand the applicable scenarios of the frequency offset estimation method.

## Description

### TECHNICAL FIELD

This disclosure relates to the field of communication technology, and specifically to a signal transmission method and a communication device.

### BACKGROUND

For some devices (for example, wake up receiver (referred to as wake-up radio (WUR)) or zero-power terminal), constrained by cost and power consumption, receivers of these devices generally have no crystal oscillator or have only low-precision oscillators, which is prone to frequency drift. As a result, filters of these receivers cannot accurately filter a frequency domain where a target signal is located, thereby reducing the demodulation performance for the target signal. At present, to reduce or eliminate frequency offset in the device (also referred to as a "first device"), before demodulating the target signal, the frequency offset in the first device can be estimated, and adjustments can be made according to the estimated frequency offset to reduce or eliminate the frequency offset occurring in the first device.

In a known technology, a method for frequency offset estimation based on multiple filters is proposed. In the method, the first device performs envelope detection on a reference signal used for frequency offset estimation by using each of multiple filters, to obtain multiple output values corresponding to the reference signal. After that, the first device can compare the multiple output values to estimate the frequency offset in the first device. However, in some scenarios (for example, a receiver receiving an amplitude shift keying (ASK) modulated signal), a receiver may only include one filter. In this case, frequency offset estimation cannot be performed based on the above method.

### SUMMARY

The disclosure provides a signal transmission method and a communication device. The following is an introduction to the various aspects of this disclosure.

In a first aspect, a signal transmission method is provided. The method includes the following. A first device receives a first reference signal at a target frequency domain position within a first bandwidth, and the first reference signal is used for frequency offset estimation. The target frequency domain position includes one or more of a first frequency domain position and a second frequency domain position. The first frequency domain position is within a first frequency band of the first bandwidth, and a frequency of the first frequency band is higher than a frequency domain of each frequency band other than the first frequency band in the first bandwidth. The second frequency domain position is within a second frequency band of the first bandwidth, and a frequency of the second frequency band is lower than a frequency domain of each frequency band other than the second frequency band in the first bandwidth.

In a second aspect, a signal transmission method is provided. The method includes the following. A second device sends a first reference signal at a target frequency domain position within a first bandwidth, and the first reference signal is used for frequency offset estimation. The target frequency domain position includes one or more of a first frequency domain position and a second frequency domain position. The first frequency domain position is within a first frequency band of the first bandwidth, and a frequency of the first frequency band is higher than a frequency domain of each frequency band other than the first frequency band in the first bandwidth. The second frequency domain position is within a second frequency band of the first bandwidth, and a frequency of the second frequency band is lower than a frequency domain of each frequency band other than the second frequency band in the first bandwidth.

In a third aspect, a communication device is provided. The communication device is a first device. The communication device includes a receiving unit configured to receive a first reference signal at a target frequency domain position within a first bandwidth, and the first reference signal is used for frequency offset estimation. The target frequency domain position includes one or more of a first frequency domain position and a second frequency domain position. The first frequency domain position is within a first frequency band of the first bandwidth, and a frequency of the first frequency band is higher than a frequency domain of each frequency band other than the first frequency band in the first bandwidth. The second frequency domain position is within a second frequency band of the first bandwidth, and a frequency of the second frequency band is lower than a frequency domain of each frequency band other than the second frequency band in the first bandwidth.

In a fourth aspect, a communication device is provided. The communication device is a second device. The communication device includes a sending unit configured to send a first reference signal at a target frequency domain position within a first bandwidth, and the first reference signal is used for frequency offset estimation. The target frequency domain position includes one or more of a first frequency domain position and a second frequency domain position. The first frequency domain position is within a first frequency band of a first bandwidth, and a frequency of the first frequency band is higher than a frequency domain of each frequency band other than the first frequency band in the first bandwidth. The second frequency domain position is within a second frequency band of the first bandwidth, and a frequency of the second frequency band is lower than a frequency domain of each frequency band other than the second frequency band in the first bandwidth.

In a fifth aspect, a communication device is provided. The communication device includes a processor, a memory, and a communication interface. The memory is configured to store one or more computer programs. The processor is configured to invoke the computer programs in the memory to cause the communication device to perform some or all of the steps in the methods described in the above aspects.

In a sixth aspect, embodiments of the disclosure provide a communication system. The system includes a terminal device and/or a network device. In another possible design, the system can also include other devices configured to interact with the terminal device or the network device in the solution provided in embodiments of the disclosure.

In a seventh aspect, embodiments of the disclosure provide a computer-readable storage medium storing computer programs. The computer program enables a communication device (such as the first device or the second device) to perform some or all of the steps in the methods described in the above aspects.

In an eighth aspect, embodiments of the disclosure provide a computer program product. The computer program product includes a non-transitory computer-readable storage medium storing a computer program. The computer program is operable with a communication device (for example, a terminal device or a network device) to perform some or all of the steps in the methods described in the above aspects. In some implementations, the computer program product can be a software installation package.

In a ninth aspect, embodiments of the disclosure provide a chip. The chip includes a memory and a processor. The processor can invoke and execute a computer program from the memory to implement some or all of the steps in the methods described in the above aspects.

The embodiments of the disclosure propose a method for frequency offset estimation. In this method, the first reference signal is transmitted through the first frequency domain position and/or the second frequency domain position within the first bandwidth. Compared with the frequency offset estimation method based on multiple filters, the method in the embodiments of disclosure does not overly limit the number of filters in the first device, which helps to expand the applicable scenarios of the frequency offset estimation method.

### BRIEF DESCRIPTION OF THE DRAWINGS

FIG. 1 is a schematic diagram of a wireless communication system 100 applied in embodiments of the disclosure.
FIG. 2 is a schematic diagram of a structure of a first device applicable to embodiments of the disclosure.
FIG. 3 is a schematic diagram of a structure of a physical layer protocol data unit (PPDU) applicable to embodiments of the disclosure.
FIG. 4 is a schematic diagram of the first device applicable to embodiments of the disclosure.
FIG. 5 is a schematic diagram of a generation method of an on-off keying (OOK) symbol applicable to embodiments of the disclosure.
FIG. 6 is a schematic diagram of a generation process of a low-power wake-up signal (LP-WUS) applicable to embodiments of the disclosure.
FIG. 7 is a schematic diagram of a generation process of a LP-WUS applicable to embodiments of the disclosure.
FIG. 8 is a schematic diagram of a generation process of a LP-WUS applicable to embodiments of the disclosure.
FIG. 9 is a schematic diagram of a generation process of a LP-WUS applicable to embodiments of the disclosure.
FIG. 10 is a schematic diagram of a known method for frequency offset estimation.
FIG. 11 is a schematic flowchart of a signal transmission method in embodiments of the disclosure.
FIG. 12 is a schematic diagram of a transmission method of a first reference signal in an embodiment of the disclosure.
FIG. 13 is a schematic diagram of a transmission method of a first reference signal in another embodiment of the disclosure.
FIG. 14 is a schematic diagram of a transmission method of a first reference signal in another embodiment of the disclosure.
FIG. 15 is a schematic diagram of a transmission method of a first reference signal in another embodiment of the disclosure.
FIG. 16 is a schematic diagram of a transmission method of a first reference signal in another embodiment of the disclosure.
FIG. 17 is a schematic diagram of a transmission method of a second reference signal in an embodiment of the disclosure.
FIG. 18 is a schematic diagram of a transmission method of a second reference signal in another embodiment of the disclosure.
FIG. 19 is a schematic diagram of transmission methods of a first reference signal and a second reference signal in an embodiment of the disclosure.
FIG. 20 is a schematic diagram of transmission methods of a first reference signal and a second reference signal in another embodiment of the disclosure.
FIG. 21 is a schematic diagram of a communication device in an embodiment of the disclosure.
FIG. 22 is a schematic diagram of a communication device in another embodiment of the disclosure.
FIG. 23 is a schematic structural diagram of a communication apparatus in embodiments of the disclosure.

### DETAILED DESCRIPTION

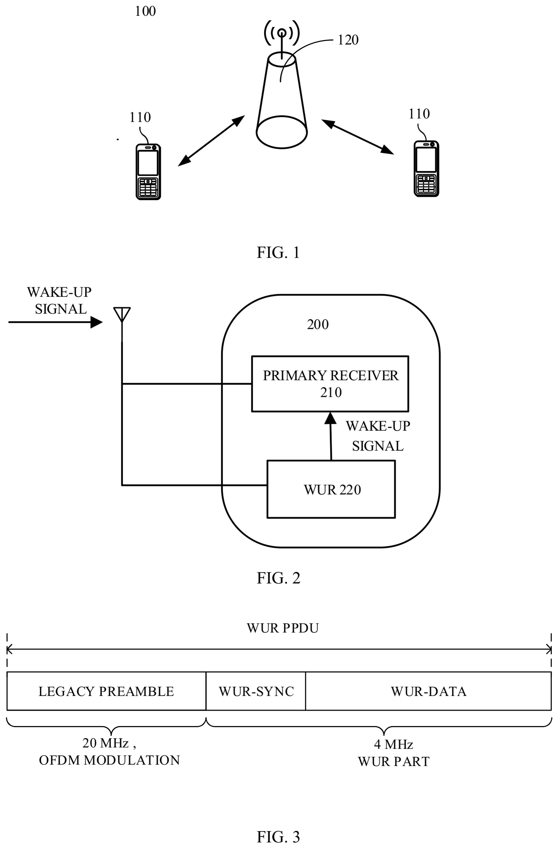

The following will describe technical solutions of embodiments of the disclosure with reference to the accompanying drawings. For ease of understanding, the following introduces communication terms and communication processes involved in the embodiments of the disclosure with reference to FIG. 1 to FIG. 3.

### Wireless communication system

The following introduces a wireless communication system applicable to embodiments of the disclosure with reference to FIG. 1. FIG. 1 illustrates an architecture of a wireless communication system 100 applied in embodiments of the disclosure. It should be understood that, the technical solutions in embodiments of the disclosure are applicable to various communication systems, for example, the 5th generation (5G) system, new radio (NR), the long term evolution (LTE) system, the LTE frequency division duplex (FDD) system, the LTE time division duplex (TDD), the cellular internet of things (IoT), and the wireless fidelity (Wi-Fi) system. The technical solutions in embodiments of the disclosure are also applicable to a future communication system, such as the 6th generation mobile communication system.

The architecture illustrated in FIG. 1 includes a first device 110 and a second device 120. In some implementations, the second device can be a network device, a terminal device, an access point (AP), a relay device, or a control node. In other implementations, the first device can be a terminal device or a station (STA).

In some scenarios, the second device 120 can be a network device 120, and the first device 110 can be a terminal device 110. The network device 120 can be a device that communicates with the terminal device 110. The network device 120 can provide communication coverage for specific geographical areas and can communicate with the terminal device 110 located within the coverage area.

The terminal device in the embodiments of the disclosure is also referred to as a user equipment (UE), an access terminal, a subscriber unit, a subscriber station, a mobile station (MS), a mobile terminal (MT), a remote station, a remote terminal, a mobile device, a user terminal, a terminal device, a wireless communication device, a user agent, or a user device. The terminal device in the embodiments of the disclosure can be a device that provides voice and/or data connectivity to a user, and can be used to connect people, objects, and machines, such as household appliances, sensors, and electronic tags, etc. with wireless connection functions. The terminals in the embodiments of the disclosure can be wireless terminals in smart home, wireless terminals in IWSN, wireless terminals in smart logistics and smart warehousing, wireless terminals in self-driving, and remote medical surgery, wireless terminals in smart grid, wireless terminals in transportation safety, and wireless terminals in smart city, etc.

The network device in the embodiments of the disclosure can be a device configured to communicate with a terminal device. The network device can also be an access network device or a wireless access network device. For example, the network device can be a base station. The network device in the embodiments of the disclosure may refer to the radio access network (RAN) node (or device) that connects the terminal device to the wireless network. Base stations can be broadly referred to by various names as follows, or replaced with the following names, for example, NodeB, evolved NodeB (eNB), next generation NodeB (gNB), relay station, access point, transmitting and receiving point (TRP), transmitting point (TP), main station MeNB, auxiliary station SeNB, multi-mode radio (MSR) node, home base station, network controller, access node; wireless node, access point (AP), transmission node, transceiver node, base band unit (BBU), remote radio unit (RRU), active antenna unit (AAU), remote radio head (RRH), central unit (CU), distributed unit (DU), or positioning node, etc. A base station can be a macro base station, a micro base station, a relay node, a donor node or an analogue, or a combination thereof. A base station can also refer to a communication module, modem or chip used to be set up within the aforementioned device or apparatus. The base station can also be a mobile switching center and a device that performs base station function in device-to-device (D2D) communication, vehicle-to-everything (V2X) communication, and machine-to-machine (M2M) communication. In addition, the base station can also be a network-side device in the 6G network and a device that undertake base station function in the future communication system. Furthermore, a base station can support networks with the same or different access technologies. Implementations of the disclosure do not impose restrictions on the specific technologies and the specific form employed by the network device.

The base station can be fixed or mobile. For example, helicopters or drones can be configured as mobile base stations and one or more cells can move according to the location of mobile stations. In other examples, helicopters or drones can be configured to serve as devices for communicating with another base station.

In some deployments, the network device in the embodiments of the disclosure can be CU or DU, or the network device including CU and DU. In addition, gNB can also include AAU.

The network device and the terminal device can be deployed on land, including indoors, outdoors, handheld or in-vehicle. It can also be deployed on the water surface. In addition, the network device and the terminal device can also be deployed on the aircraft, balloons and satellite in the air. The embodiments of the disclosure do not impose restrictions on the scenarios located by the network device and the terminal device.

It should be understood that, some or all of the functions of the communication device in the embodiments of the disclosure can also be realized through software functions running on the hardware, or through virtualization functions instantiated on the platform (such as a cloud platform).

In some other scenarios, taking the WIFI system as an example, with reference to FIG. 1, the second device 120 can be an AP, and correspondingly, the first device 110 can be an STA, where the AP is configured to create a wireless network to provide wireless network services for the STA.

It should be noted that, FIG. 1 exemplarily illustrates a first device and a second device, and optionally, the communication system 100 may include multiple first devices and the coverage area of each first device may include other numbers of second devices. Implementations of the disclosure are not limited in this regard.

In addition, in some implementations, the communication system 100 can also include network controllers, mobile management entities and other network entities. Implementations of the disclosure are not limited in this regard.

With development of wireless communication technology, people hope to integrate wireless communication systems with various vertical industries such as logistics, manufacturing, transportation and energy. For example, the wireless communication system can be integrated with the industrial wireless sensor network (IWSN). For instance, the wireless communication system can be integrated with the smart logistic and the smart warehousing. For instance, the wireless communication system can be integrated with the smart home network. However, in these industries, terminal devices usually need to have features such as low cost, small size (such as ultra-thin), maintenance-free, and long service life. Therefore, in order to satisfy the above conditions, zero-power device is introduced into the wireless communication system.

For example, the first device 110 illustrated in FIG. 1 can be a zero-power device. Correspondingly, the second device 120 illustrated in FIG. 1 can be a power supply device. That is to say, the second device 120 can supply power to the first device 110 by sending a power supply signal.

It should be noted that, in the embodiments of the disclosure, the above-mentioned zero-power devices, classified from the perspective of power supply, may include ambient powered devices (such as ambient powered IoT (AMP IoT) devices), battery-free terminals, and maintenance-free terminals. For ease of understanding, the following introduces zero-power devices and ambient powered devices separately.

### Zero-power device

Zero-power communication technology can be used for communication between the first device and the second device. In this case, the first device can also be referred to as "zero-power communication device", "zero-power device", "zero-power communication terminal", or "zero-power terminal".

Zero-power terminal, as the name suggests, is a terminal device that consumes very little of its own energy or even no energy at all during the communication process. At present, zero-power terminal have one or more of the following advantages.

The first advantage is that there is no need to construct a complex radio frequency (RF) path since the zero-power terminal do not need to actively transmit signals. For example, there may be no power amplifier (PA), RF filter, or the like configured in the RF path, so as to reduce the cost and size of the terminal.

The second advantage is that, since the zero-power terminal do not need to actively generate high-frequency signals, a high-frequency crystal oscillator is not required, which reduces the cost and size of the terminal.

The third advantage is that, since the zero-power terminal can communicate with a network device by using backscattering technology, the energy consumed by the terminal during communication is relatively low, and the terminal may even not need to consume its own energy.

In zero-power communication technology, according to the energy source of the terminal and the way of energy utilization, zero-power terminals can be classified into three categories: passive zero-power terminals, semi-passive zero-power terminals and active zero-power terminals.

### 1. Passive zero-power terminal

Passive zero-power terminals usually do not require built-in batteries. When a passive zero-power terminal approaches a network device and is within the near-field range formed by radiation of an antenna(s) of the network device, an antenna of the passive zero-power terminal can generate an induced current through electromagnetic induction. The induced current can power the passive zero-power terminal to drive a low-power chip circuit of the passive zero-power terminal, to realize demodulation of a forward link signal and modulation of a backward link signal. For a backscatter link, the passive zero-power terminal can perform signal transmission through backscattering.

Based on the introduction above, it can be seen that the passive zero-power terminal do not require a built-in battery to drive either the forward-link based or backward-link based transmission process, and thus is a truly zero-power terminal.

In some implementations, the aforementioned passive zero-power terminal can be an electronic tag, and correspondingly, the network device can be a reader of a radio frequency identification (RFID) system, which is used to read the content in the electronic tag and/or to modify the content in the electronic tag.

### 2. Semi-passive zero-power terminal

Semi-passive zero-power terminals are not equipped with batteries themselves, but they can use energy harvesting modules (for example, RF energy harvesting modules) to harvest radio wave energy and store the harvested energy in an energy storage unit (such as a capacitor). After the energy storage unit obtains energy, it can supply power to the zero-power terminal to drive the low-power chip circuit, so as to perform demodulation of forward-link signals and modulation of backward-link signals. For backscatter links, zero-power terminals perform signal transmission through backscattering.

Based on the introduction above, it can be seen that neither the transmission process based on the forward link nor that based on the backward link of the semi-passive zero-power terminal requires a built-in battery for driving. Although the energy stored in the capacitor is used during operation, since the energy comes from radio wave energy harvested by the energy harvesting module, the semi-passive zero-power terminal is truly a zero-power terminal.

### 3. Active zero-power terminal

Active zero-power terminals can be equipped with built-in batteries. The battery can supply power to the active zero-power terminal to drive the low-power chip circuit, so as to perform demodulation of forward-link signals and modulation of backward-link signals. For backscatter links, active zero-power terminals use the backscatter implementation for signal transmission. Therefore, the zero-power consumption of such a terminal mainly lies in that signal transmission on the backward link does not consume power from the terminal itself but is based on backscattering. method.

For active zero-power terminals, they can be powered by built-in batteries. Therefore, the communication distance of active zero-power terminals can be increased and the reliability of communication can be improved. Therefore, they can be applied in some scenarios with relatively high requirements on communication distances, reading delays, and other aspects.

In some implementations, the aforementioned active zero-power terminal can be an electronic tag, and the network device can be an RFID reader. In this case, the built-in battery can power the RFID chip in the electronic tag to increase the reading and writing distance between the RFID reader and the electronic tag. On the other hand, the built-in battery can power the RFID chip in the electronic tag to reduce the reading and writing delay of the RFID reader for the electronic tag, which is conducive to improving the reliability of communication.

### Cellular passive IoT

As introduced earlier, in some industries, terminal devices usually need to have features such as low cost, small size (such as ultra-thin), maintenance-free, and long service life. Therefore, the application of battery-free and low-cost passive IoT devices becomes a key technology for cellular IoT. Passive IoT devices can be based on the zero-power terminals introduced earlier and extended on this basis to be applicable to cellular IoT. Therefore, a new type of device has been introduced on the basis of zero-power devices at present, namely the ambient powered device.

### Ambient powered device

In known wireless communication systems (such as NR systems and WiFi systems), ambient powered devices are similar to passive zero-power devices or semi-passive zero-power devices in zero-power communication, and the energy required for their operation usually comes from environmental energy harvesting. Environmental energy sources can be wireless signals, solar energy, and thermal energy, etc. Such devices have advantages such as low cost and battery-free operation, and can support large-scale deployment at low cost and maintenance-free operation of IoT devices. Therefore, in the current standards, research is conducted on how to support such devices in existing wireless communication systems.

In embodiments of the disclosure, the aforementioned device based on ambient energy can be referred to as ambient IoT or AMP IoT device.

### Energy-saving technology based on wake-up receiver (WUR)

In order to further save power for the first device (for example, terminal device), some protocols (for example, the 3GPP R18 standard) introduce WUR and propose to receive a low-power wake-up signal (LP-WUS) based on the WUR. LP-WUS is also known as "wake-up signal (WUS) or energy-saving signal". The wake-up receiver features extremely low cost, extremely low complexity and extremely low power consumption. The wake-up receiver mainly receives the wake-up signal through a method based on envelope detection. Therefore, the modulation method and waveform of the LP-WUS received by the wake-up receiver are different from those of the signals carried by PDCCH in other communication protocols (for example, 3GPP R16 and 3GPP R17).

In some implementations, the wake-up signal mainly refers to an envelope signal obtained from ASK modulation on a carrier signal. Demodulation of the envelope signal is carried out by a low-power circuit that is mainly driven based on energy from a wireless radio frequency signal(s). Therefore, the wake-up receiver can be passive. Alternatively, the wake-up receiver can also be powered by a terminal. Regardless of the power supply method, the wake-up receiver significantly reduces power consumption compared with the traditional receiver in the first device (also known as a "primary receiver").

In some implementations, the wake-up receiver can be integrated into the first device as an additional module of the first device. The wake-up receiver can also be used independently as a wake-up function module for the first device.

FIG. 2 illustrates a structure of the first device applicable to the embodiments of the disclosure. As illustrated in FIG. 2, the first device 200 can include a primary receiver 210 and a WUR 220. To save the power consumption of the first device 200, the first device can be configured to be in a sleep mode (for example, when the first device is in the DRX off-duration), or the primary receiver 210 of the first device can be in the sleep mode. In this case, the first device 200 can use the WUR 220 to receive a wake-up signal. In some cases, if the first device 200 needs to wake up the primary receiver 210, the network device can send the wake-up signal (WUS). Accordingly, the first device can monitor the WUS through the WUR 220. When the WUR 220 detects the WUS, the WUR 220 can wake up the primary receiver 210. Otherwise, the primary receiver 210 of the first device can be in the sleep mode.

### Transmission of the wake-up signal

As introduced earlier, in some protocols, WUR can be adopted to achieve energy saving of devices. In some implementations, a WUR-based AP (also referred to as "WUR AP") can notify a WUR-based non-AP STA of energy-saving operations through a WUR wake-up frame.

In some implementations, the wake-up frame can be carried in a physical layer protocol data unit (PPDU), where the PPDU can be a WUR-based PPDU, also referred to as "WUR PPDU". FIG. 3 illustrates a structure of the PPDU applicable to the embodiments of the disclosure.

As illustrated in FIG. 3, it is specified in some protocols that a WUR PPDU frame can contain three parts: legacy preamble, WUR-Sync, and WUR-Data. The legacy preamble is configured to protect the WUR-Sync and WUR-Data, which can be understood as a non-WUR part retained for compatibility considerations. The legacy preamble employs traditional OFDM modulation and a 20 MHz bandwidth. The WUR-Sync is configured to help identify and demodulate the WUR-Data. The WUR-Data is configured to carry a WUR physical layer service data unit (PSDU). The WUR-Sync and WUR-Data employ On-Off Keying (OOK) modulation and a 4 MHz of the 20 MHz channel bandwidth.

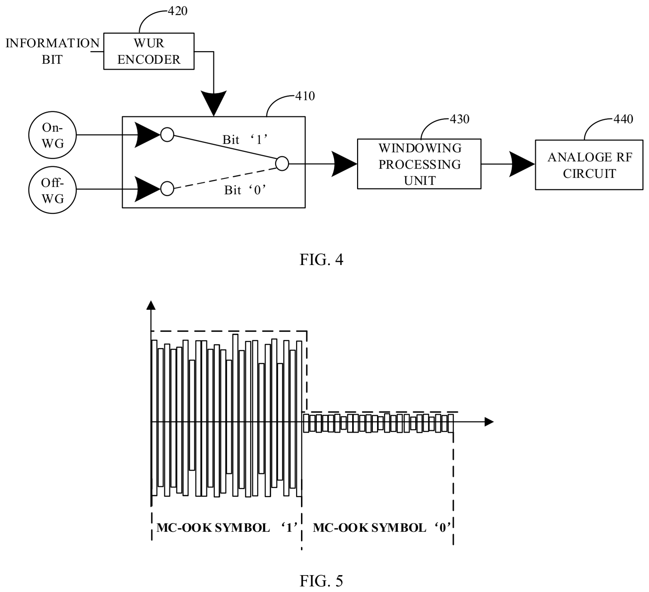

FIG. 4 is a schematic diagram of the first device applicable to embodiments of the disclosure. As illustrated in FIG. 4, the first device can include a modulation unit 410, a WUR encoder 420, a windowing processing unit 430, and an analog RF circuit 440. The WUR encoder 420 is configured to encode information bits and input into the modulation unit 410. Correspondingly, the modulation unit 410 performs OOK (also referred to as 2ASK) modulation. For example, the modulation unit 410 is configured to modulate the amplitude of the carrier signal to non-zero values and zero values, with non-zero values corresponding to On and zero values corresponding to Off, representing the information bits. Afterwards, the windowing processing unit 430 is configured to window the output of the modulation unit 410 and send the processed signal to the analog RF circuit 440. After that, the analog RF circuit 440 is configured to process the received signal.

In some implementations, the WUR-Sync can carry a synchronization sequence repeated twice, in which bit 1 is modulated to On and 0 is modulated to Off. For example, the WUR-Data carries user information, and after the user information is encoded, the encoded user information is modulated with OOK modulation to form multi-carrier (multi-carrier-OOK, MC-OOK) symbols of corresponding lengths. The OOK signal is generated through multiple carriers, and therefore, the signal is called the MC-OOK signal. Correspondingly, the modulated symbol can be referred to as the MC-OOK symbol.

The following introduces the OOK symbols applicable to the embodiments of the disclosure in combination with FIG. 5. As illustrated in FIG. 5, by mapping the corresponding amplitude values onto multiple subcarriers in the frequency domain and then converting to a time-domain signal via an IDFT, the resulting waveform closely resembles a waveform produced by ASK modulation, where bit 1 is represented by the high level of an OOK symbol and bit 0 is represented by the low level of an OOK symbol.

In some implementations, the MC-OOK signal can be generated by using known multi-carrier modulation (such as orthogonal frequency division multiplexing (OFDM) modulation). This modulation mode can maintain good compatibility with existing OFDM systems and reduce the complexity of the transmitter introduced for implementing WUR signals.

### Generation method of WUS signal

In some protocols (for example, 3GPP R18), the generation methods of the WUS signal are discussed. At present, the common generation methods of the WUS signal can be classified according to four generation schemes of MC-ASK waveforms in the following. In the following, *K* represents the number of points of an inverse discrete Fourier transform (IDFT), and *N* represents the number of subcarriers used for transmitting the WUS signal. *K* and *N* are positive integers.

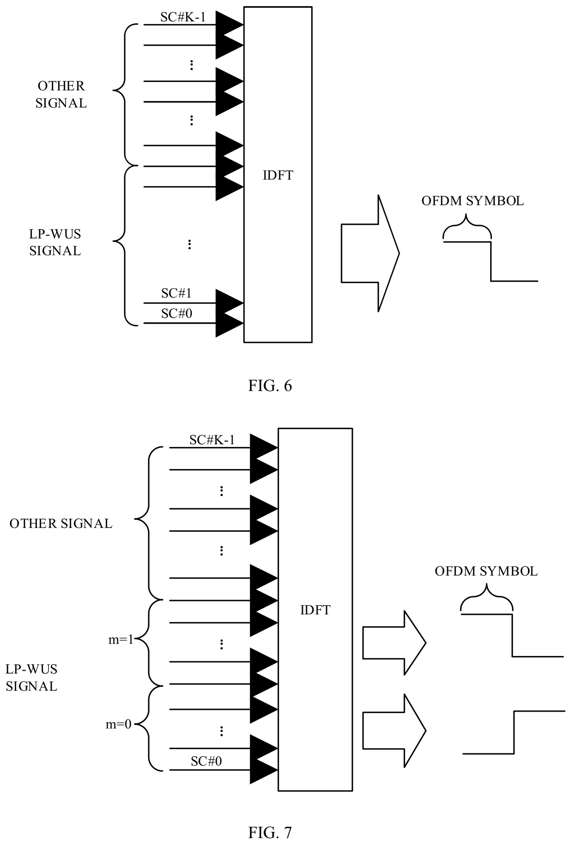

In the OOK-1 scheme, the generation process of LP-WUS can be illustrated in FIG. 6. Each OFDM symbol carries one bit. After the subcarriers carrying the LP-WUS is modulated and undergo an IDFT, the corresponding output signal is OOK=1. When the subcarriers carrying LP-WUS have zero power, the corresponding output signal is OOK=0.

In the OOK-2 scheme, the generation process of LP-WUS can be illustrated in FIG. 7. Taking *m*=2 as an example, each OFDM symbol carries *m* bits in the frequency domain. The *N* subcarriers carrying the LP-WUS are divided into *m* segments, and each segment carries 1 bit of information. In each segment, all subcarriers are modulated to produce OOK=1, and all subcarriers have zero power to produce OOK=0.

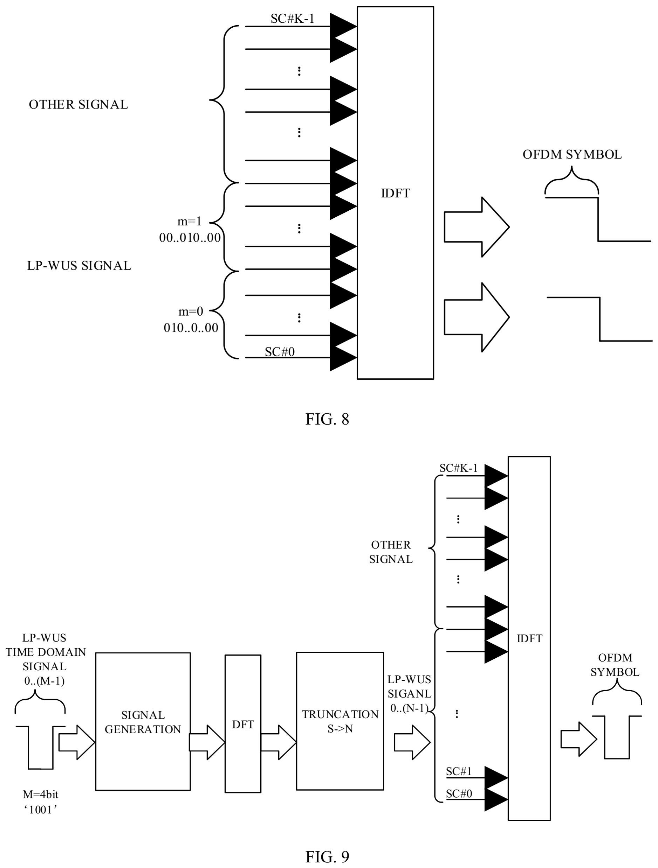

In the OOK-3 scheme, the generation process of LP-WUS can be illustrated in FIG. 8. Each OFDM symbol carries one bit. The *N* subcarriers carrying the LP-WUS are divided into *m* segments, and *m* is a positive integer. Among the *m* segments, when one subcarrier in each segment is modulated and other subcarriers have zero power, the corresponding output signal is OOK=1. When all subcarriers in all segments have zero power, the corresponding output signal is OOK=0.

In the OOK-4 scheme, the generation process of LP-WUS can be illustrated in FIG. 9. Taking *m*=4 as an example, each OFDM symbol carries *m* bits in the time domain. The *N* subcarriers carrying the LP-WUS are generated by discrete Fourier transform (DFT), and *m* bits are represented by *S* sampling points. The *S* sampling points are passed through the DFT to form *S* subcarriers. The *S* subcarriers are passed through truncation and other processing to form *N* subcarriers, which are then passed through an IDFT to generate the OOK signal.

In some implementations, besides the MC-ASK waveforms, LP-WUS can also employ an MC-FSK waveform. The MC-FSK waveform is mainly generated in the following two schemes.

In the FSK-1 scheme, the *N* subcarriers carrying the LP-WUS are divided into *m* segments, and *m* is a positive integer. In each OFDM symbol, one segment in each pair of segments is modulated, and the other segment has zero power.

In the FSK-2 scheme, the *N* subcarriers carrying the LP-WUS are divided into *2m* segments, and *m* is a positive integer. In each OFDM symbol, one of the *2m* segments is modulated, and the other segment has zero power.

For some devices (for example, WUR or zero-power terminal), constrained by cost and power consumption, receivers of these devices generally have no crystal oscillator or have only low-precision oscillators, which is prone to frequency drift. As a result, filters of these receivers cannot accurately filter a frequency domain where a target signal is located, thereby reducing the demodulation performance for the target signal. At present, to reduce or eliminate frequency offset in the device (also referred to as a "first device"), before demodulating the target signal, the frequency offset in the first device can be estimated, and adjustments can be made according to the estimated frequency offset to reduce or eliminate the frequency offset occurring in the first device.

In a known technology, a frequency offset estimation method based on multiple filters is proposed. In this method, the first device performs envelope detection by using multiple filter separately on the reference signal used for frequency offset estimation, so as to obtain multiple output values corresponding to the reference signal. Afterwards, the first device can compare the multiple output values to estimate the frequency offset in the first device.

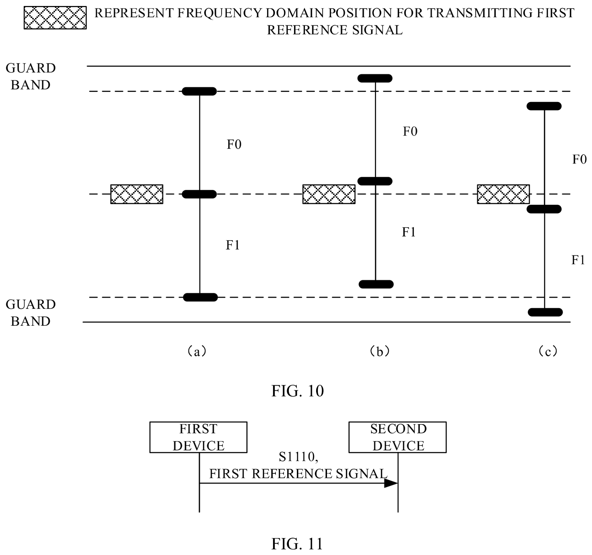

For ease of understanding, the following introduces the known frequency offset estimation methods with reference to FIG. 10. Usually, in the scenario where signal modulation is based on FSK modulation, the receiver of the first device includes multiple filters: filter F0 and filter F1. As illustrated in FIG. 10, the reference signal is located at the frequency center of the target bandwidth. The operating bandwidth of filter F0 is the upper-half of the target bandwidth, and the operating bandwidth of filter F1 is the lower-half of the target bandwidth.

As illustrated in (a) of FIG. 10, if the frequency offset does not occur on the oscillator of the receiver, filter F0 and filter F1 each operate on half of the frequency band occupied by the reference signal. After envelope detection, the output values corresponding to the reference signal output by the filter F0 and the filter F1 are approximately equal.

As illustrated in (b) of FIG. 10, if the positive frequency offset occurs on the oscillator of the receiver, the operating bandwidth of the filter F0 cannot cover the frequency band occupied by the reference signal. Ideally, after envelope detection, the output value of the filter F0 is zero. The operating bandwidth of filter F1 includes the frequency band occupied by the reference signal. After envelope detection, the output value of filter F1 is non-zero.

As illustrated in (b) of FIG 10, if the negative frequency offset occurs on the oscillator of the receiver, the operating bandwidth of the filter F1 cannot cover the frequency band occupied by the reference signal. Ideally, after envelope detection, the output value of the filter F1 is zero. The operating bandwidth of filter F0 includes the frequency band occupied by the reference signal. After envelope detection, the output value of filter F0 is non-zero.

It should be noted that in this disclosure, the above-mentioned output values can be amplitude values. Optionally, in this disclosure, the output values can also be other physical quantities.

Based on the introduction above, it can be known that the method of frequency offset estimation based on multiple filters relies on multiple filters. However, in some scenarios (for example, a receiver receiving an ASK modulated signal), the receiver may only contain one filter. In this case, frequency offset estimation based on the above method cannot be carried out.

Therefore, in response to the above problems, a method for frequency offset estimation is proposed in embodiments of the disclosure. In this method, a first reference signal is sent at a first frequency domain position and/or a second frequency domain position within a first bandwidth, which can enable the first device to perform envelope detection on the first reference signal using one filter. Compared with the frequency offset estimation method based on multiple filters, the solution in the present disclosure helps to expand the applicable scenarios of the frequency offset estimation method.

For ease of understanding, the following describes the signal transmission method in the embodiments of the disclosure with reference to FIG. 11. FIG. 11 is a schematic flowchart of the signal transmission method in the embodiments of the disclosure. The method illustrated in FIG. 11 includes step S1110.

In step S1110, at a target frequency domain position within a first bandwidth, a second device sends a first reference signal to a first device.

The above first reference signal is used for frequency offset estimation. In other words, the above first reference signal is used to estimate a frequency offset in the first device. It should be understood that in the embodiments of this disclosure, the above first reference signal may also have other functions. For example, the first reference signal may be a signal that reuses an existing signal in a known communication system. Alternatively, the above first reference signal may be a signal dedicated to frequency offset estimation. It should also be understood that in the embodiments of this disclosure, the name of the first reference signal is not limited, and the first reference signal may also be replaced with the first signal.

Embodiments of the disclosure do not specifically limit the above frequency offset estimation. In some implementations, the above frequency offset estimation includes estimating a direction of the frequency offset and/or estimating a magnitude of the frequency offset. The direction of the frequency offset may include a positive frequency offset and/or a negative frequency offset. The positive frequency offset can be understood as that the operating frequency band of the filter offsets in the direction of frequency increasing relative to the first frequency band. The negative frequency offset can be understood as that the operating frequency band of the filter offsets in the direction of frequency decreasing relative to the first frequency band.

Generally, the frequency error of a local oscillator of a network device is relatively small. Therefore, in order to improve the precision of frequency offset estimation, the network device can send the first reference signal within the first bandwidth. That is to say, the second device can be a network device. Optionally, if the above-mentioned issue is not considered, the first reference signal can also be sent by another type of second device. Embodiments of the disclosure are not limited in this regard.

The embodiments of this disclosure provide three implementations for the target frequency domain position, which will be introduced below with reference to implementations 1 to 3.

Implementation 1, the target frequency domain position may include a first frequency domain position.

In some implementations, the first frequency domain position may be located within a first frequency band of the first bandwidth. The first frequency band can be understood as a sub-frequency band within the first bandwidth, or a frequency range included in the first frequency band belongs to the first bandwidth.

In some implementations, a frequency of the first frequency band is higher than a frequency domain of each frequency band other than the first frequency band in the first bandwidth, or the first frequency band can be located within a higher frequency range in the target frequency band.

For example, the first frequency band may contain some or all of the frequencies between the center frequency of the first bandwidth and the upper-limit frequency of the first bandwidth. If the first frequency band contains all the frequencies between the center frequency of the first bandwidth and the upper-limit frequency of the first bandwidth, then the first frequency band can be regarded as the upper-half of the first bandwidth.

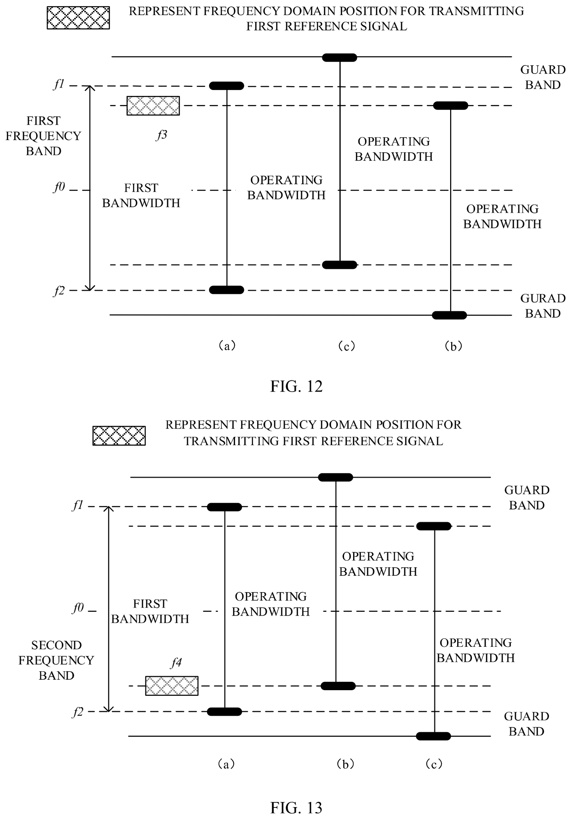

In an example, the first frequency band contains all the frequencies between the center frequency of the first bandwidth and the upper-limit frequency of the first bandwidth. As illustrated in FIG. 12, assume that the center frequency of the first bandwidth is *f0* and the upper-limit frequency of the first bandwidth is *f1.* Correspondingly, the first frequency band can include all the frequencies between *f0* and *f1*. In this case, the first frequency domain position used for transmitting the first reference signal can be located within the first frequency band.

As described above, the first frequency domain position can be located within the first frequency band. The specific position of the first frequency domain position within the first frequency band is not limited in embodiments of the present disclosure. In some implementations, the first frequency domain position and the upper-limit frequency of the first frequency band are separated by a fifth frequency distance, or in other words, the first frequency domain position and the upper-limit frequency of the first frequency band are separated by a third frequency interval.

Embodiments of the disclosure do not specifically limit the determination manner of the fifth frequency distance. For example, the fifth frequency distance can be a frequency distance between the upper-limit frequency of the first frequency domain position and the upper-limit frequency of the first frequency band. Another example is that the fifth frequency distance can be a frequency distance between the center frequency of the first frequency domain position and the upper-limit frequency of the first frequency band. Also, the fifth frequency distance can be a frequency distance between the lower-limit frequency of the first frequency domain position and the upper-limit frequency of the first frequency band.

In some cases, the above fifth frequency distance can be 0. If the fifth frequency distance is the frequency distance between the upper-limit frequency of the first frequency domain position and the upper-limit frequency of the first frequency band, then the frequency distance between the upper-limit frequency of the first frequency domain position and the upper-limit frequency of the first frequency band is 0. In other words, the upper-limit frequency of the first frequency domain position is the same as the upper-limit frequency of the first frequency band.

It should be understood that the above description of the first frequency domain position is based on the first frequency band. In the embodiments of this disclosure, the first frequency domain position can be described from another perspective, that is the first frequency domain position is within the frequency band between the center frequency of the first bandwidth and the upper-limit frequency of the first bandwidth.

In some implementations, the first frequency domain position can be determined based on the first frequency distance. In other words, the first frequency domain position is associated with the first frequency distance. The first frequency distance can be associated with the upper-limit frequency of the first bandwidth. For instance, the first frequency distance can be the frequency distance between the first frequency domain position and the upper-limit frequency of the first bandwidth. In other words, the first frequency domain position and the upper-limit frequency of the first bandwidth are separated by the first frequency distance. In the embodiments of the disclosure, the first frequency distance can be associated with the lower-limit frequency and/or the center frequency of the first bandwidth.

Embodiments of the disclosure do not specifically limit the determination manner of the first frequency distance. In some implementations, the first frequency distance can be associated with the upper-limit frequency of the first frequency domain position. For example, the first frequency distance can be a frequency distance between the upper-limit frequency of the first frequency domain position and the upper-limit frequency of the first bandwidth. In some implementations, the first frequency distance can be associated with the center frequency of the first frequency domain position. For example, the first frequency distance can be a frequency distance between the center frequency of the first frequency domain position and the upper-limit frequency of the first bandwidth. In some implementations, the first frequency distance can be associated with the lower-limit frequency of the first frequency domain position. For example, the first frequency distance can be a frequency distance between the lower-limit frequency of the first frequency domain position and the upper-limit frequency of the first bandwidth.

Embodiments of the disclosure do not specifically limit the setting manner of the above frequency distance. In some implementations, the frequency distance can be determined based on one or more of the following parameters: frequency offset performance of the first device, and the frequency offset adjustment precision of the first device. In other words, the frequency distance may be associated with one or more of the following parameters: the frequency offset performance of the first device, and the frequency offset adjustment precision of the first device.

For example, the frequency distance is determined based on the frequency offset performance of the first device, where the frequency offset performance is used to indicate the frequency offset in the first device at a certain operating frequency. For example, a performance indicator of an oscillator in some devices indicate that the frequency offset is 100 parts per million (ppm) at a certain operating frequency.

In some implementations, the frequency distance can be set based on the frequency offset indicated by the frequency offset performance. For example, the frequency distance can be less than or equal to the frequency offset indicated by the frequency offset performance, where the frequency offset indicated by the frequency offset performance can be the maximum frequency offset.

For example, the frequency distance is determined based on the frequency offset adjustment precision of the first device. In some implementations, if the frequency offset adjustment precision is relatively high, a smaller frequency distance can be set. When the frequency offset adjustment precision is relatively low, a larger frequency distance can be set.

As introduced above, in the frequency offset estimation method based on multiple filters, the frequency offset needs to be estimated based on the difference between the output values corresponding to the multiple filters. This estimation method can be used to estimate only a limited frequency offset that is within 0.5 times the bandwidth of the reference signal. If the frequency offset exceeds 0.5 times the bandwidth of the reference signal, the difference between the output values corresponding to the multiple filters no longer change, so the magnitude of the frequency offset cannot be estimated. In the embodiments of this disclosure, the frequency distance can be adjusted to match different frequency offset adjustment precision, which helps to expand the applicable scenarios of the frequency offset estimation method of the embodiments of this disclosure.

In the embodiments of this disclosure, the above frequency distance can also be jointly determined based on the frequency offset performance of the first device and the frequency offset adjustment precision of the first device. For example, the frequency offset indicated by the frequency offset performance of the first device is 100 ppm, and the frequency offset adjustment precision of the first device is relatively high. In this case, the frequency distance can be set to a relatively small value within a target range, where the upper-limit frequency offset of the target range is the frequency offset indicated by the frequency offset performance, that is 100ppm. In the embodiments of this disclosure, the frequency offset performance of the first device and the frequency offset adjustment precision of the first device can also be used separately to determine the frequency distance.

In addition, in the embodiments of this disclosure, the above-mentioned frequency distance may include the first frequency distance and/or the fifth frequency distance.

In the embodiments of this disclosure, the first reference signal sent at the first frequency domain position can be used to determine whether a negative frequency offset occurs. For ease of understanding, the introduction will continue in combination with FIG. 12. As illustrated in FIG. 12, assume that the first bandwidth includes frequencies between the lower-limit frequency *f2* and the upper-limit frequency *f1,* and the first frequency position *f3* is used for transmitting the first reference signal.

As illustrated in (a) of FIG. 12, if no frequency offset occurs in the first device, the operating bandwidth of the filter is aligned with the first bandwidth, and the frequency domain position of the first reference signal is within the operating bandwidth. In this case, after envelope detection, the output value of the first device is relatively high.

As illustrated in (b) of FIG. 12, if a negative frequency offset occurs in the first device and the operating bandwidth of the filter cannot or cannot fully cover the frequency band occupied by the first reference signal, then after envelope detection, the output value of the first device is less than the output value in the case of no frequency offset occurring in the first device.

It should be noted that, in the embodiments of this disclosure, it may not be possible to estimate a positive frequency offset only based on the first reference signal transmitted at the first frequency domain position. As illustrated in (c) of FIG. 12, if the first device has a positive frequency offset, the operating bandwidth of the filter can still fully cover that of the first reference signal. In this case, after envelope detection, the output value of the first device may be similar to the output value in the case of no frequency offset occurring in the first device. Therefore, it can only be determined that no negative frequency offset occurs in the first device, but cannot be determined whether a positive frequency offset occurs in the first device.

Implementation 2, the target frequency domain position may include a second frequency domain position.

In some implementation, the second frequency domain position may be located within a second frequency band of the first bandwidth. The second frequency band can be understood as a sub-frequency band within the first bandwidth, or a frequency range included in the second frequency band belongs to the first bandwidth.

In some implementations, a frequency of the second frequency band is lower than a frequency domain of each frequency band other than the second frequency band in the first bandwidth, or the second frequency band can be located within a lower frequency range in the target frequency band.

For example, the second frequency band may contain some or all of the frequencies between the center frequency of the first bandwidth and the lower-limit frequency of the first bandwidth. If the second frequency band contains all the frequencies between the center frequency of the first bandwidth and the lower-limit frequency of the first bandwidth, then the second frequency band can be regarded as the lower-half of the first bandwidth.

In an example, the second frequency band contains all the frequencies between the center frequency of the first bandwidth and the lower-limit frequency of the first bandwidth. As illustrated in FIG. 13, assume that the center frequency of the first bandwidth is *f0* and the lower-limit frequency of the first bandwidth is *f2*. Correspondingly, the second frequency band can include all the frequencies between *f0* and *f2*. In this case, the second frequency domain position used for transmitting the second reference signal can be located within the second frequency band.

As described above, the second frequency domain position can be located within the second frequency band. The specific position of the second frequency domain position within the second frequency band is not limited in embodiments of the present disclosure. In some implementations, the second frequency domain positon and the lower-limit frequency of the second frequency band are separated by a fourth frequency distance. In other words, the second frequency domain positon and the lower-limit frequency of the second frequency band are separated by a fourth frequency interval.

Embodiments of the disclosure do not specifically limit the determination manner of the fourth frequency distance. For example, the fourth frequency distance can be a frequency distance between the lower-limit frequency of the second frequency domain position and the lower-limit frequency of the second frequency band. Another example is that the fourth frequency distance can be a frequency distance between the center frequency of the second frequency domain position and the lower-limit frequency of the second frequency band. Also, the fourth frequency distance can be a frequency distance between the lower-limit frequency of the second frequency domain position and the lower-limit frequency of the second frequency band.

In some cases, the above fourth frequency distance can be 0. If the fourth frequency distance is the frequency distance between the lower-limit frequency of the second frequency domain position and the lower-limit frequency of the second frequency band, then the frequency distance between the lower-limit frequency of the second frequency domain position and the lower-limit frequency of the second frequency band is 0. In other words, the lower-limit frequency of the second frequency domain position is the same as the lower-limit frequency of the second frequency band.

It should be understood that the above description of the second frequency domain position is based on the second frequency band. In the embodiments of this disclosure, the second frequency domain position can be described from another perspective, that is the second frequency domain position is within the frequency band between the center frequency of the first bandwidth and the lower-limit frequency of the first bandwidth.

In some implementations, second frequency domain position can be determined based on the second frequency distance. In other words, the second frequency domain position is associated with the second frequency distance. The second frequency distance can be associated with the lower-limit frequency of the first bandwidth. For instance, the second frequency distance can be the frequency distance between the second frequency domain position and the lower-limit frequency of the first bandwidth. In other words, the second frequency domain position and the lower-limit frequency of the first bandwidth are separated by the second frequency distance. In the embodiments of the disclosure, the second frequency distance can be associated with the upper-limit frequency and/or the center frequency of the first bandwidth.

Embodiments of the disclosure do not specifically limit the determination manner of the second frequency distance. In some implementation methods, the second frequency distance can be associated with the lower-limit frequency of the second frequency domain position. For example, the second frequency distance can be a frequency distance between the lower-limit frequency of the second frequency domain position and the lower-limit frequency of the first bandwidth. In some implementations, the second frequency distance can be associated with the center frequency of the second frequency domain position. For example, the second frequency distance can be a frequency distance between the center frequency of the second frequency domain position and the lower-limit frequency of the first bandwidth. In some implementations, the second frequency distance can be associated with the upper-limit frequency of the second frequency domain position. For example, the second frequency distance can be a frequency distance between the upper-limit frequency of the first frequency domain position and the lower-limit frequency of the first bandwidth.

Embodiments of the disclosure do not specifically limit the setting manner of the above frequency distance. In some implementations, the frequency distance can be determined based on one or more of the following parameters: the frequency offset performance of the first device, and the frequency offset adjustment precision of the first device. In other words, the frequency distance may be associated with one or more of the following parameters: the frequency offset performance of the first device, and the frequency offset adjustment precision of the first device.

For example, the frequency distance is determined based on the frequency offset performance of the first device, where the frequency offset performance is used to indicate the frequency offset in the first device at a certain operating frequency. For example, a performance indicator of an oscillator in some devices indicate that the frequency offset is 100 parts ppm at a certain operating frequency.

In some implementations, the frequency distance can be set based on the frequency offset indicated by the frequency offset performance. For example, the frequency distance can be less than or equal to the frequency offset indicated by the frequency offset performance, where the frequency offset indicated by the frequency offset performance can be the maximum frequency offset.

For example, the frequency distance is determined based on the frequency offset adjustment precision of the first device as an example. In some implementations, if the frequency offset adjustment precision is relatively high, a smaller frequency distance can be set. When the frequency offset adjustment precision is relatively low, a large frequency distance can be set.

As introduced above, in the frequency offset estimation method based on multiple filters, the frequency offset needs to be estimated based on the difference between the output values corresponding to the multiple filters. This estimation method can be used to estimate only a limited frequency offset that is within 0.5 times the bandwidth of the reference signal. If the frequency offset exceeds 0.5 times the bandwidth of the reference signal, the differences between the output values corresponding to the multiple filters no longer change, so the magnitude of the frequency offset cannot be estimated. In the embodiments of this disclosure, the frequency distance can be adjusted to match different frequency offset adjustment precision, which helps to expand the applicable scenarios of the frequency offset estimation method of the embodiments of this disclosure.

In the embodiments of this disclosure, the above frequency distance can also be jointly determined based on the frequency offset performance of the first device and the frequency offset adjustment precision of the first device. For example, the frequency offset indicated by the frequency offset performance of the first device is 100 ppm, and the frequency offset adjustment precision of the first device is relatively high. In this case, the frequency distance can be set to a relatively small value within a target range, where the upper-limit frequency offset of the target range is the frequency offset indicated by the frequency offset performance. In the embodiments of this disclosure, the frequency offset performance of the first device and the frequency offset adjustment precision of the first device can also be used separately to determine the frequency distance.

In addition, in the embodiments of this disclosure, the above-mentioned frequency distance may include the second frequency distance and/or the fourth frequency distance.

In the embodiments of this disclosure, the first reference signal sent at the second frequency domain position can be used to determine whether a positive frequency offset occurs. For ease of understanding, the introduction will continue in combination with FIG. 13. As illustrated in FIG. 13, assume that the first bandwidth includes frequencies between the lower-limit frequency *f2* and the upper-limit frequency *f1,* and the second frequency position *f4* is used for transmitting the first reference signal.

As illustrated in (a) of FIG. 13, if no frequency offset occurs in the first device, the operating bandwidth of the filter is aligned with the first bandwidth, and the frequency domain position of the first reference signal is within the operating bandwidth. In this case, after envelope detection, the output value of the first device is relatively high.

As illustrated in (b) of FIG. 13, if a positive frequency offset occurs in the device and the operating bandwidth of the filter cannot or cannot fully cover the frequency band occupied by the first reference signal, then after envelope detection, the output value of the first device is less than the output value in the case of no frequency offset occurring in the first device.

It should be noted that, in the embodiments of this disclosure, it may not be possible to estimate a negative frequency offset only based on the first reference signal transmitted at the second frequency domain position. As illustrated in (c) of FIG. 13, if the first device has a negative frequency offset, the operating bandwidth of the filter can still fully cover that of the first reference signal. In this case, after envelope detection, the output value of the first device may be similar to the output value in the case of no frequency offset occurring in the first device. Therefore, it can only be determined that no positive frequency offset occurs in the first device, but cannot be determined whether a negative frequency offset occurs in the first device.

Implementation 3, the target frequency domain position may include a first frequency domain position and a second frequency domain position.

In implementations of this disclosure, for the first frequency domain position, reference may be made to the relevant description in implementation 1, and for the second frequency domain position, reference may be made to the relevant description in implementation 2, which will not be repeated herein for the sake of brevity.

In the embodiments of this disclosure, both the first frequency domain position and the second frequency domain position can be used to transmit the first reference signal(s). The first reference signal transmitted at the first frequency domain position can be used for negative frequency offset estimation, and the first reference signal transmitted at the second frequency domain position can be used for positive frequency offset estimation, which helps to improve the precision of frequency offset estimation for the first device.

In some implementations, the first frequency domain position may overlap with the second frequency domain position in the time domain, which helps to reduce the time required for frequency offset estimation in the first device. In other words, the time domain position of the first reference signal transmitted at the first frequency domain position is the same as that of the first reference signal transmitted at the second frequency domain position. In other words, the first reference signal transmitted at the first frequency domain position can be transmitted simultaneously with the first reference signal transmitted at the second frequency domain position.

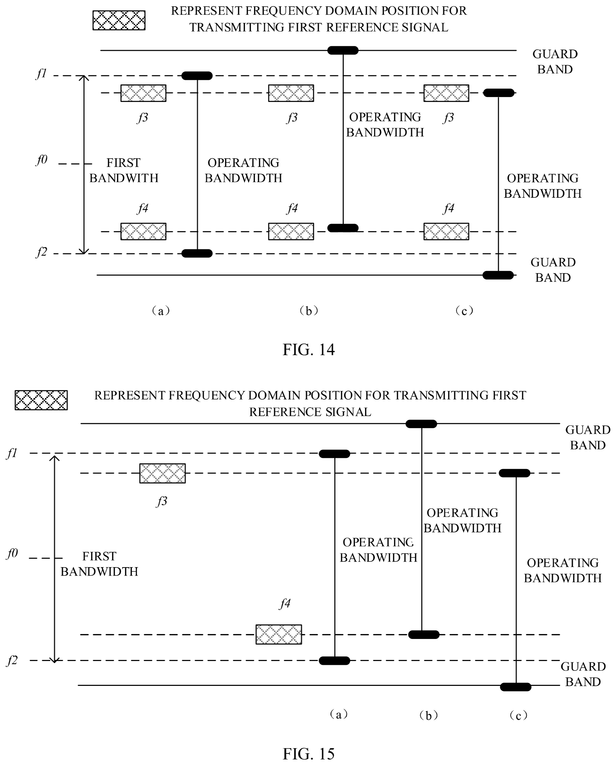

For ease of understanding, the following describes the transmission method of the first reference signal in the embodiments of this disclosure with reference to FIG. 14. As illustrated in FIG. 14, assume that the first bandwidth includes frequencies between the lower-limit frequency *f2* and the upper-limit frequency *f1.* The first frequency position *f3* and the second frequency position *f4* are respectively used to transmit the first reference signals: reference signal 1 and reference signal 2. In addition, the time domain positions for transmitting reference signal 1 and reference signal 2 overlap in the time domain.

As illustrated in (a) of FIG. 14, if no frequency offset occurs in the first device, the operating bandwidth of the filter is aligned with the first bandwidth, and the frequency domain positions of reference signal 1 and reference signal 2 are within the operating bandwidth. In this case, after envelope detection, the output value of the first device is relatively high.

As illustrated in (b) of FIG. 14, if a positive frequency offset occurs in the first device, the operating bandwidth of the filter encompasses the frequency band used for transmitting reference signal 1, but does not or does not fully encompass the frequency band used for transmitting reference signal 2. In this case, after envelope detection, the output value of the first device is less than the output value in the case of no frequency offset occurring in the first device, that is, the output value of the first device is less than that in the case illustrated in (a) of FIG. 14.

As illustrated in (c) of FIG. 14, if a negative frequency offset occurs in the first device, the operating bandwidth of the filter encompasses the frequency band used for transmitting reference signal 2, but does not or does not fully encompass the frequency band used for transmitting reference signal 1. In this case, after envelope detection, the output value of the first device is less than the output value in the case of no frequency offset occurring in the first device, that is, the output value of the first device is less than that in the case illustrated in (a) of FIG. 14.

In some implementations, the first frequency domain position and the second frequency domain position may not overlap or may partially overlap in the time domain, which helps improve the flexibility of transmitting the first reference signal(s). In other words, the time domain position of the first reference signal transmitted at the first frequency domain position is different from that of the first reference signal transmitted at the second frequency domain position. In other words, the first reference signal transmitted at the first frequency domain position can be transmitted non-simultaneously with the first reference signal transmitted at the second frequency domain position.

In some implementations, the first frequency domain position and the second frequency domain position may not overlap or may partially overlap in the time domain, which means that the first frequency domain position and the second frequency domain position is staggered in the time domain. In other words, the first reference signal is transmitted alternatively at the first frequency domain position and the second frequency domain position.

It should be noted that, in the above staggered transmission method, the first reference signal transmitted at the first frequency domain position may be earlier in the time domain than the first reference signal transmitted at the second frequency domain position. Alternatively, in the embodiments of this disclosure, the first reference signal transmitted at the first frequency domain position may be later in the time domain than the first reference signal transmitted at the second frequency domain position.

For ease of understanding, the following describes the transmission method of the first reference signal in the embodiment of the disclosure with reference to FIG. 15. As illustrated in FIG. 15, assume that the first bandwidth includes frequencies between the lower-limit frequency *f2* and the upper-limit frequency *f1,* and the first frequency position *f3* and the second frequency position *f4* are respectively used to transmit the first reference signals, which are reference signal 1 and reference signal 2. The time domain position for transmitting reference signal 1 is later than that for transmitting reference signal 2.

As illustrated in (a) of FIG. 15, if no frequency offset occurs in the first device, the operating bandwidth of the filter is aligned with the first bandwidth, and the frequency domain positions of the reference signal 2 and the reference signal 1 transmitted successively are within the operating bandwidth. In this case, after envelope detection, the output value of the first device is relatively high.

As illustrated in (b) of FIG. 15, if a positive frequency offset occurs in the first device, during the transmission of a reference signal 2, the operating bandwidth of the filter cannot or cannot fully encompass the frequency band used for transmitting the reference signal 2. In this case, after envelope detection, the output value of the first device is less than the output value in the case of no frequency offset occurring in the first device. In other words, the output value of the first device is less than that in the case illustrated in (a) of FIG. 15. During the transmission of the reference signal 1, the operating bandwidth of the filter can encompass the frequency band used for transmitting reference signal 1. In this case, after envelope detection, the output value of the first device is similar to the output value in the case of no frequency offset occurring in the first device. In other words, the output value of the first device is similar to that in the case illustrated in (a) of FIG. 15.

As illustrated in (c) of FIG. 15, if a negative frequency offset occurs in the first device, during the transmission of a reference signal 2, the operating bandwidth of the filter can encompass the frequency band used for transmitting the reference signal 2. In this case, after envelope detection, the output value of the first device is similar to the output value in the case of no frequency offset occurring in the first device. In other words, the output value of the first device is similar to that in the case illustrated in (a) of FIG. 15. During the transmission of the reference signal 1, the operating bandwidth of the filter cannot or cannot fully encompass the frequency band used for transmitting the reference signal 1. In this case, after envelope detection, the output value of the first device is less than the output value in the case of no frequency offset occurring in the first device. In other words, the output value of the first device is less than that in the case illustrated in (a) of FIG. 15.

Embodiments of the disclosure do not specifically limit the arrangement of the first frequency domain position and the second frequency domain position in the time domain. Besides the staggered arrangement, other methods can also be included. For example, in time period 1, the first reference signal can be transmitted only at the first frequency domain position, and in time period 2, the first reference signal is transmitted through the second frequency domain position. Another example is that in time period 1, the first reference signal can be interleaved between the first frequency domain position and the second frequency domain position, and in time period 2, the first reference signal is transmitted only at the first frequency domain position. Also, in time period 1, the first reference signal can be interleaved between the first frequency domain position and the second frequency domain position, and in time period 2, the first reference signal is transmitted only through the second frequency domain position. The sequence between time period 2 and time period 1 is not limited. For example, time period 1 can be earlier than time period 2, or time period 1 can be later than time period 2.

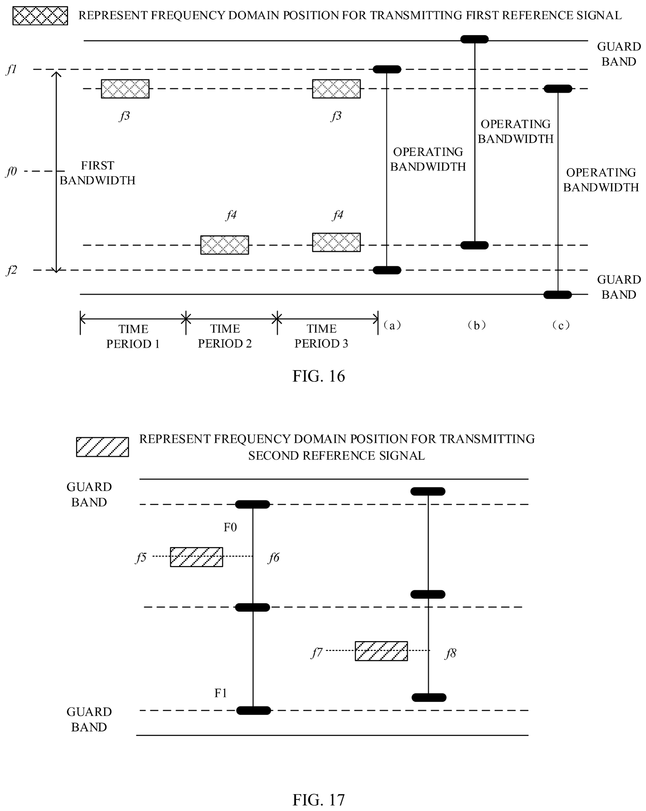

The above describes the transmission methods of the first reference signal in the embodiments of this disclosure with reference to implementation 1 to 3. The above three implementations can be used independently or in combination. For ease of understanding, the following describes the transmission method of the first reference signal in the embodiments of this disclosure with reference to FIG. 16, by taking a combination of the three implementations as an example.

As illustrated in FIG. 16, assume that the first bandwidth includes frequencies between the lower-limit frequency *f2* and the upper-limit frequency *f1,* and the first frequency position *f3* and the second frequency position *f4* are used to transmit the first reference signals. The transmission process of the first reference signals can be divided into time period 1, time period 2, and time period 3 in chronological order. In time period 1, the first reference signal can be transmitted at the first frequency domain position. In time period 2, the first reference signal can be transmitted at the second frequency domain position. In time period 3, the first reference signals can be transmitted simultaneously at the first frequency domain position and the second frequency domain position.

The resource(s) (such as the time domain resource and /or frequency band) used for transmitting the first reference signal is not limited in embodiments of the present disclosure. In some implementations, the resource used for transmitting the first reference signal described above may be periodic or aperiodic.

In addition, in embodiments of the disclosure, the configuration manner of the resource(s) used for transmitting the first reference signal (such as time domain resource and/or frequency domain resource) is not limited. In some implementations, the resource used for transmitting the first reference signal may be one or more of: pre-configured, predefined, configured by the network device, scheduled by the network device, or requested by the first device.

Correspondingly, in a scenario where multiple implementations are combined, the first reference signal in the aforementioned multiple implementations may be transmitted periodically. In some implementations, the periods of the first reference signal in different implementations may be different, or the periods of the first reference signal in different implementations may be the same.

For example, the period of transmitting the first reference signal in implementation 1 and/or implementation 2 may be different from the period of transmitting the first reference signal in implementation 2. For another example, the period of transmitting the first reference signal in implementation 1 and/or implementation 2 may be longer than the period of transmitting the first reference signal in implementation 2. For another example, the period of transmitting the first reference signal in implementation 1 and/or implementation 2 may be shorter than the period of transmitting the first reference signal in implementation 2.

As can be seen from the previous description, the first device needs to receive the first reference signal through the filter in order to perform the frequency offset estimation based on the first reference signal. Therefore, in order to improve the success rate of the first device in receiving the first reference signal, the frequency band of the first reference signal is associated with the operating frequency band of the filter in the first device. In other words, the frequency band of the first reference signal is determined based on the operating frequency band of the filter in the first device. For example, a part or all of the frequency band of the first reference signal can be within the operating frequency band of the filter in the first device.

The above describes the transmission methods of the first reference signal in the embodiments of this disclosure. The following will introduce the determination manner of the first bandwidth in the embodiments of this disclosure.

In some implementations, a frequency range of the first bandwidth is associated with one or more of the following: a capability of the first device, a type of the first device, and a bandwidth range of a target signal received by the first device.

For example, the frequency range of the first bandwidth is determined based on the capability of the first device. In other words, the frequency range of the first bandwidth can be associated with the capability of the first device. Generally, the larger the frequency range of the first bandwidth, the larger the possible range of frequency offset. Therefore, for a first device with higher capability, the frequency range of the first bandwidth can be relatively large. For a first device with lower capability, the frequency range of the first bandwidth can be relatively small.

In some implementations, the capability of the first device can be associated with the precision of the oscillator in the first device. In other words, the capability of the first device can be determined based on the precision of the oscillator in the first device. This oscillator can be the oscillator in the receiver of the first device. For example, in some scenarios, the oscillator in the first device has low precision and is prone to drift, but the offset from the correct frequency will be within a certain range. For first devices with different capabilities, the performance indicators of their oscillators (as an example of the capability of the first device) may be different. In this case, the network device can determine the frequency domain range for the first bandwidth according to the performance indicators of the oscillator of the first device.

For example, the frequency range of the first bandwidth is determined based on the type of the first device. In other words, the frequency range of the first bandwidth can be associated with the type of the first device. In some implementations, the type of the first device may include zero-power terminal and non-zero-power terminal. Correspondingly, for the zero-power terminal, the frequency range of the first bandwidth can be relatively small. For the non-zero-power terminal, the frequency range of the first bandwidth can be relatively large.

In the embodiments of this disclosure, the frequency range of the first bandwidth can also be jointly determined based on the capability and type of the first device, so as to improve the rationality of determining the first bandwidth.

For example, the frequency range of the first bandwidth is determined based on the bandwidth range of the target signal received by the first device. In other words, the frequency range of the first bandwidth can be associated with the bandwidth range of the target signal received by the first device. As introduced above, frequency offset estimation is used for the first device to receive the target signal. In other words, frequency offset estimation is used for the first device to correct the frequency offset in order to receive the target signal. In some implementations, in order to increase the possibility of aligning the operating bandwidth of the filter in the first device with the bandwidth of the transmitted target signal, the frequency range of the first bandwidth can be related to the bandwidth of the target signal received by the first device. In some implementations, the frequency range of the first bandwidth can be equal to the frequency range of the bandwidth of the target signal received by the first device. In the embodiments of this disclosure, the frequency range of the first bandwidth can be independent of the frequency range of the bandwidth of the target signal received by the first device.

For example, assume that the target signal is an LP-WUS signal. In the generation scheme of the MC-ASK waveform introduced above, the LP-WUS signal can occupy *N* subcarriers. Correspondingly, the frequency range of the first bandwidth can be the bandwidth corresponding to *N* subcarriers.

For another example, assume that the target signal is an LP-WUS signal. In the generation method of the MC-ASK waveform introduced above, the LP-WUS signal can occupy *N* subcarriers, and the *N* subcarriers are divided into *m* segments. Correspondingly, the frequency range of the first bandwidth can be the bandwidth corresponding to the subcarriers included in one of the *m* segments.

In some implementations, in order to improve the precision of frequency offset estimation, the frequency domain position of the first bandwidth can be the same as a frequency domain position of the bandwidth for transmitting the target signal. In other words, the first bandwidth is the same as the bandwidth for transmitting the target signal.

For example, assume that the target signal is an LP-WUS signal. In the generation method of the MC-ASK waveform introduced above, the LP-WUS signal can occupy *N* subcarriers. Correspondingly, the first bandwidth is the same as the bandwidth corresponding to the *N* subcarriers.

For example, assume that the target signal is an LP-WUS signal. In the generation method of the MC-ASK waveform introduced above, the LP-WUS signal can occupy *N* subcarriers. Moreover, the *N* subcarriers are divided into *m* segments. Correspondingly, the first bandwidth can be the same as the bandwidth corresponding to the subcarriers included in one of the *m* segments.

In some scenarios, the frequency offset range of the first device is not significantly affected by the bandwidth of the transmitted signal. Therefore, in order to improve the flexibility of transmitting the first reference signal, in the embodiments of this disclosure, the first bandwidth can be different from the bandwidth for transmitting the target signal. In other words, the bandwidth used for frequency offset estimation can be different from the bandwidth for transmitting the target signal.

Based on the above introduction, in some implementations, the first device can perform frequency offset estimation based on the first reference signal transmitted on the first bandwidth and the output value of the first device when no frequency offset occurs (also referred to as the "reference value") to obtain the frequency offset value. Subsequently, the first device can correct the frequency offset based on the frequency offset value, so that the operating frequency band of the filter can correspond to (for example, be aligned with) the frequency band of the transmitted target signal to receive the target signal. However, in the actual process, the output value of the first device when no frequency offset occurs may be unknown, which may make it difficult to estimate the frequency offset. Therefore, a method for determining the reference value is urgently needed.

It is found that using a fixed or preset reference value is inappropriate, which may lead to a decrease in the precision of frequency offset estimation. This is because the position of the first device may affect the power of the first reference signal received by the first device. Correspondingly, envelope detection of first reference signals with different powers will result in different output values corresponding to the first reference signals. In this case, if frequency offset estimation is carried out based on the same reference value, it may lead to a decrease in the precision of frequency offset estimation.

Suppose the reference value is set to a large value, while the first device has no frequency offset. However, the position of the first device causes the received power of the first reference signal to be low. Correspondingly, when the first device performs envelope detection based on the first reference signal corresponding to this power, the resulting output value is also small. In the extreme case, if the output value is less than the reference value, when estimating the frequency offset based on the output value and the reference value, the first device may be mistakenly judged to have a frequency offset, resulting in a decrease in the precision of the frequency offset estimation.

Therefore, in view of the above problems, the embodiment of this disclosure further provides a signal transmission method. In this method, the first device can determine the reference value based on a transmitted second reference signal. Compared with the method of using a fixed or preset reference value for frequency offset estimation, this method helps to improve the precision of frequency offset estimation.

In other words, the second device sends the second reference signal within a second bandwidth to the first device, where the second reference signal is used for determining the reference value, and the reference value is used for frequency offset estimation.

Further, in the above-mentioned method of frequency offset estimation based on multiple filters, when the frequency band occupied by the reference signal is limited, the difference between the output values of multiple filters after envelope detection is relatively small, and is easily affected by the channel environment, which is not conducive to identifying small frequency offsets. In the embodiments of the disclosure, the reference value for frequency estimation is determined based on the second reference signal, which is helpful to improve the precision of frequency offset adjustment compared with the method based on multiple filters.

As introduced above, in frequency offset estimation, the output value of the first reference signal output after the envelope detection can be an amplitude value. Correspondingly, for the convenience of comparison with the output value, in the embodiments of this disclosure, the reference value can also be an amplitude value. In this case, the reference value can also be referred to as a "reference amplitude value". In the embodiments of this disclosure, the reference value can also be another physical quantity.

Generally speaking, the frequency error of the local oscillator of a network device is relatively small. Therefore, in order to improve the precision of frequency offset estimation, the network device can send a second reference signal within a second bandwidth. In other words, the second device can be a network device. If the above-mentioned issue is not considered, the second reference signal can also be sent by other types of second devices. Embodiments of the disclosure are not limited in this regard.

As can be seen from the above, in the embodiments of this disclosure, the reference value is set to simulate the output value of the first device when no frequency offset occurs. Therefore, in order to improve the precision of frequency offset estimation, the frequency domain position of the second reference signal can be determined based on the operating bandwidth of the filter in the first device. In other words, the frequency domain position of the second reference signal is associated with the operating bandwidth of the filter in the first device. For example, the frequency domain position of the second reference signal can be within the operating frequency band of the first device.

In some implementations, the center frequency position corresponding to the frequency domain position of the second reference signal can be determined based on the center frequency position of the operating frequency band. For example, the center frequency position corresponding to the frequency domain position of the second reference signal can be the same as the center frequency position of the operating frequency band. In other words, the center frequency position corresponding to the frequency domain position of the second reference signal can overlap the center frequency position of the operating frequency band. In some other implementations, the center frequency position corresponding to the frequency domain position of the second reference signal can be determined based on an offset value and the center frequency position of the operating frequency band. For example, the center frequency position corresponding to the frequency domain position of the second reference signal can be obtained by taking the center frequency position of the operating frequency band as the starting point and increasing by the offset value. For instance, the center frequency position corresponding to the frequency domain position of the second reference signal can be obtained by taking the center frequency position of the operating frequency band as the starting point and decreasing by the offset value. The offset value can be preset, predefined, or pre-configured, which is not limited in embodiments of the disclosure.

In some implementations, the first device may include multiple filters. In this case, each of the multiple filters can correspond to one distinct frequency domain position of the second reference signal to receive the second reference signal. Optionally, in the embodiments of the present disclosure, the multiple filters can also correspond to the same frequency domain position to receive the second reference signal. For example, as illustrated in FIG. 10, the frequency domain position of the second reference signal can be the same as the frequency domain position for transmitting the reference signal in the traditional solution.

If each of the multiple filters can correspond to one distinct frequency domain positions of the second reference signal, in some implementations, the time domain positions of the second reference signals received by the multiple filters overlap in the time domain, which helps to reduce the time for determining the reference value. In some other implementations, the time domain positions of the second reference signals received by the multiple filters are staggered in the time domain, which helps to improve the flexibility of transmitting the second reference signal.

For ease of understanding, the following will introduce the transmission method of the second reference signal in the embodiments of the disclosure with reference to FIG. 17. As illustrated in FIG. 17, assume that the receiver of the first device includes multiple filters: filter F0 and filter F1. The operating bandwidth of filter F0 is the upper-half of the target bandwidth, and the operating bandwidth of filter F1 is the lower-half of the target bandwidth.

As illustrated in (a) of FIG. 17, for the filter F0, the center frequency position of the frequency domain position of the second reference signal corresponding to the filter F0 is *f5*, and the center frequency domain position of the operating bandwidth of the filter F0 is *f6*. The center frequency position *f*5 is the same as the center frequency position *f*6.

As illustrated in (b) of FIG. 17, the center frequency position of the frequency domain location of the second reference signal corresponding to the filter F1 is *f7,* and the center frequency domain position of the operating bandwidth of the filter F1 is *f8*. The center frequency position *f7* is the same as the center frequency position*f8*.

In some scenarios, different first devices correspond to different operating frequency bands. Therefore, in order to reduce the complexity of setting the second reference signal, in some implementations, the frequency domain position of the second reference signal is determined based on a third frequency distance. In other words, the frequency domain position of the second reference signal is associated with the third frequency distance.

The third frequency distance is associated with one or more of the following positions: the center frequency position of the second bandwidth, the upper-limit frequency position of the second bandwidth, and the lower-limit frequency position of the second bandwidth.

For example, the third frequency distance is associated with the center frequency position of the second bandwidth. In some implementations, the third frequency distance can be a frequency distance between the frequency domain position of the second reference signal and the center frequency position of the second bandwidth. Embodiments of the disclosure do not specifically limit the frequency domain position of the second reference position. For example, the frequency domain position of the second reference signal can be the center frequency domain position of the second reference signal. For another example, the frequency domain position of the second reference signal can be the upper-limit frequency of the second reference signal. For yet another example, the frequency domain position of the second reference signal can be the lower-limit frequency of the second reference signal.

In the embodiment of the disclosure, the frequency domain position of the second reference signal is determined based on the third frequency distance associated with the center frequency position of the second bandwidth, which helps to increase the likelihood that the second reference signal is within the operating frequency band, thereby improving the precision of frequency offset estimation.

For example, the third frequency distance is associated with the lower-limit frequency position of the second bandwidth. In some implementations, the third frequency distance can be the frequency distance between the frequency domain position of the second reference signal and the lower-limit frequency position of the second bandwidth. Embodiments of the disclosure do not specifically limit the frequency domain position of the second reference position. For example, the frequency domain position of the second reference signal can be the center frequency domain position of the second reference signal. For another example, the frequency domain position of the second reference signal can be the upper-limit frequency of the second reference signal. For yet another example, the frequency domain position of the second reference signal can be the lower-limit frequency of the second reference signal.

For example, the third frequency distance is associated with the upper-limit frequency position of the second bandwidth. In some implementations, the third frequency distance can be the frequency distance between the frequency domain position of the second reference signal and the upper-limit frequency position of the second bandwidth. Embodiments of the disclosure do not specifically limit the frequency domain position of the second reference position. For example, the frequency domain position of the second reference signal can be the center frequency domain position of the second reference signal. For another example, the frequency domain position of the second reference signal can be the upper-limit frequency of the second reference signal. For yet another example, the frequency domain position of the second reference signal can be the lower-limit frequency of the second reference signal.

As introduced earlier, different first devices have different corresponding operating frequency bands. Therefore, in order to increase the possibility that the second reference signal is within the operating frequency band, in some implementations, the frequency domain position of the second reference signal can be determined based on the center frequency position of the second bandwidth. In the embodiments of the disclosure, the frequency domain position of the second reference signal can also be independent of the center frequency of the second bandwidth.

If the frequency domain position of the second reference signal is determined based on the center frequency position of the second bandwidth, in some implementations, the center frequency position corresponding to the frequency domain position of the second reference signal can be the same as the center frequency position of the second bandwidth. In other words, the center frequency position corresponding to the frequency domain position of the second reference signal can overlap with the center frequency position of the second bandwidth. In some other implementations, the center frequency position corresponding to the frequency domain position of the second reference signal can be determined based on an offset value and the center frequency position of the second bandwidth. For example, the center frequency position corresponding to the frequency domain position of the second reference signal can be obtained by taking the center frequency position of the second bandwidth as the starting point and increasing by the offset value. For another example, the center frequency position corresponding to the frequency domain position of the second reference signal can be obtained by taking the center frequency position of the second bandwidth as the starting point and decreasing by the offset value. The offset value can be preset, predefined, or preconfigured, which is not limited in embodiments of the disclosure.

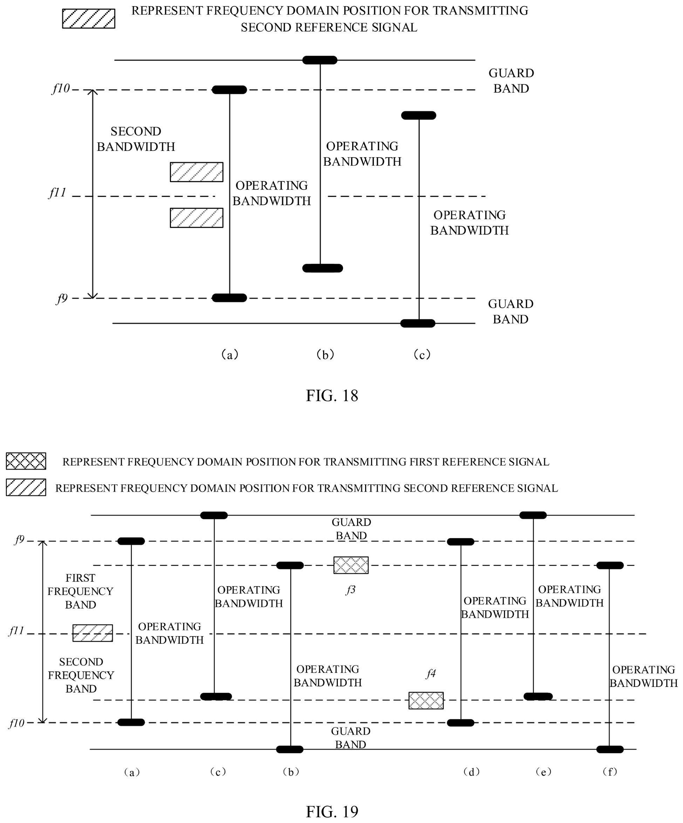

For ease of understanding, the following will introduce the transmission method of the second reference signal in another embodiment of the disclosure in combination with FIG. 18. As illustrated in FIG. 18, it is assumed that the second bandwidth includes frequencies between the lower-limit frequency *f9* and the upper-limit frequency *f10,* and the center frequency position of the second bandwidth is *f11.* Correspondingly, the center frequency position of the frequency domain of the second reference signal can be the center frequency position f11.

As illustrated in (a) of FIG. 18, if no frequency offset occurs in the first device, the operating bandwidth of the filter is aligned with the second bandwidth, and the frequency band used for transmitting the second reference signal is within the operating bandwidth. In this case, after envelope detection, the output value of the first device can be a reference value.

As illustrated in (b) of FIG. 18, a positive frequency offset occurs in the first device, and the frequency band used for transmitting the second reference signal is within the operating bandwidth. In this case, after envelope detection, the output value of the first device can be a reference value.

As illustrated in (c) of FIG. 18, a negative frequency offset occurs in the first device, and the frequency band used for transmitting the second reference signal is within the operating bandwidth. In this case, after envelope detection, the output value of the first device can be a reference value.

It should be noted that, in the embodiments of the disclosure, the above solution for determining the reference value can be used alone. In the embodiments of the disclosure, the above solution for determining the reference value can also be used in combination with the frequency offset estimation based on the first reference signal. In other words, in the embodiments of the disclosure, the reference value determined based on the second reference signal can be used for the subsequent frequency offset estimation based on the first reference signal.

As introduced above, the number of first reference signals for frequency offset estimation can be one or more. Correspondingly, in order to facilitate the comparison between the reference value and the output value, the number of second reference signals can be determined based on the number of first reference signals. In other words, the number of first reference signals can be determined based on the number of second reference signals. Stated differently, the number of second reference signals can be associated with the number of first reference signals.

In some implementations, the number of the first reference signals may be the same as that of the second reference signals. In other words, the number of the first reference signals used to calculate the output values is the same as the number of the second reference signals used to calculate the reference values.

For example, assume that the first reference signal is transmitted based on implementation 1. There is one first reference signal used to calculate an output value. Correspondingly, there may be one second reference signal.

For another example, assume that the first reference signal is transmitted based on implementation 2. There is one first reference signal used to calculate an output value. Correspondingly, there may be one second reference signal.

For another example, assume that the first reference signal is transmitted in the staggered transmission method in implementation 3. There is one first reference signal used to calculate an output value. Correspondingly, there may be one second reference signal.

For another example, assume that the first reference signal is transmitted in the simultaneous transmission method in implementation 3. The number of first reference signals used to calculate an output value is 2. Correspondingly, the number of second reference signals may be 2.

In the embodiments of the disclosure, the number of second reference signals may also be independent of the number of first reference signals. In some implementations, the frequency band of the second reference signal corresponds to that of the first reference signal. In other words, the frequency band of the second reference signal can be determined based on that of the first reference signal, which helps to improve the convenience of comparing the reference value and the output value. For example, the frequency band of the second reference signal can be the same as that of the first reference signal. In the case where the first device performs frequency offset estimation based on the first reference signals transmitted simultaneously at the first frequency domain position and the second frequency domain position, the frequency band occupied by the second reference signal can be the sum of the frequency bands of the first reference signals transmitted simultaneously at the first frequency domain position and the second frequency domain position.

In embodiments of the disclosure, a resource used for transmitting the second reference signal (such as the time domain resource and/or frequency band) is not limited. In some implementations, the resource used for transmitting the second reference signal described above can be periodic or aperiodic.

In the embodiments of this disclosure, if the first reference signal and the second reference signal are used in combination and both the first reference signal and the second reference signal are transmitted periodically, a transmission period of the first reference signal can be the same as a transmission period of the second reference signal, or the transmission period of the first reference signal can be shorter than that of the second reference signal. In the embodiments of the disclosure, the first reference signal and the second reference signal may also be transmitted aperiodically. Optionally, the first reference signal is transmitted periodically, while the second reference signal is transmitted aperiodically. Optionally, the first reference signal is transmitted aperiodically, while the second reference signal is transmitted periodically.

In addition, a configuration manner of the resource (including time domain resource and/or frequency band) used for transmitting the second reference signal is not limited in embodiments of the present disclosure. In some implementations, the resource used for transmitting the second reference signal can be configured in one or more of the following ways: pre-configured, pre-defined, configured by a network device, scheduled by a network device, and requested by a first device.

In some implementations, to improve the comparability between the reference value and the output value, the second bandwidth can be the same as the first bandwidth. In the embodiments of the disclosure, to improve the flexibility of transmitting the second reference signal and/or the first reference signal, the second bandwidth can be different from the first bandwidth. For example, the frequency domain range of the second bandwidth can be the same as that of the first bandwidth, and the frequency domain position of the second bandwidth can be different from that of the first bandwidth. Another example is that the frequency domain range of the second bandwidth can be different from that of the first bandwidth, and the frequency domain position of the second bandwidth can be the same as that of the first bandwidth. Also, the frequency domain range of the second bandwidth can be different from that of the first bandwidth, and the frequency domain position of the second bandwidth can be different from that of the first bandwidth.

In some implementations, to improve the comparability between the reference value and the output value, the second bandwidth can be the same as the first bandwidth. In the embodiments of the disclosure, to improve the flexibility of transmitting the second reference signal and/or the first reference signal, the second bandwidth can be different from the first bandwidth. For example, the frequency domain range of the second bandwidth can be the same as that of the first bandwidth, and the frequency domain position of the second bandwidth can be different from that of the first bandwidth. Another example is that the frequency domain range of the second bandwidth can be different from that of the first bandwidth, and the frequency domain position of the second bandwidth can be the same as that of the first bandwidth. Also, the frequency domain range of the second bandwidth can be different from that of the first bandwidth, and the frequency domain position of the second bandwidth can be different from that of the first bandwidth.

As introduced above, the target signal can be transmitted through the target bandwidth. In some implementations, to improve the precision of frequency offset estimation, the second bandwidth can be the same as the target bandwidth. In the embodiments of the disclosure, to improve the flexibility of transmitting the second reference signal, the second bandwidth can be different from the target bandwidth. For example, the frequency domain range of the second bandwidth can be the same as that of the target bandwidth, and the frequency domain position of the second bandwidth can be different from that of the target bandwidth. Another example is that the frequency domain range of the second bandwidth can be different from that of the target bandwidth, and the frequency domain position of the second bandwidth can be the same as that of the target bandwidth. Yet another example is that the frequency domain range of the second bandwidth can be different from that of the target bandwidth, and the frequency domain position of the second bandwidth can be different from that of the target bandwidth.

In the embodiments of the disclosure, the second bandwidth can be determined in the same manner as the first bandwidth, and reference can be made to the determination of the first bandwidth, which will not be described in detail again herein for the sake of brevity.

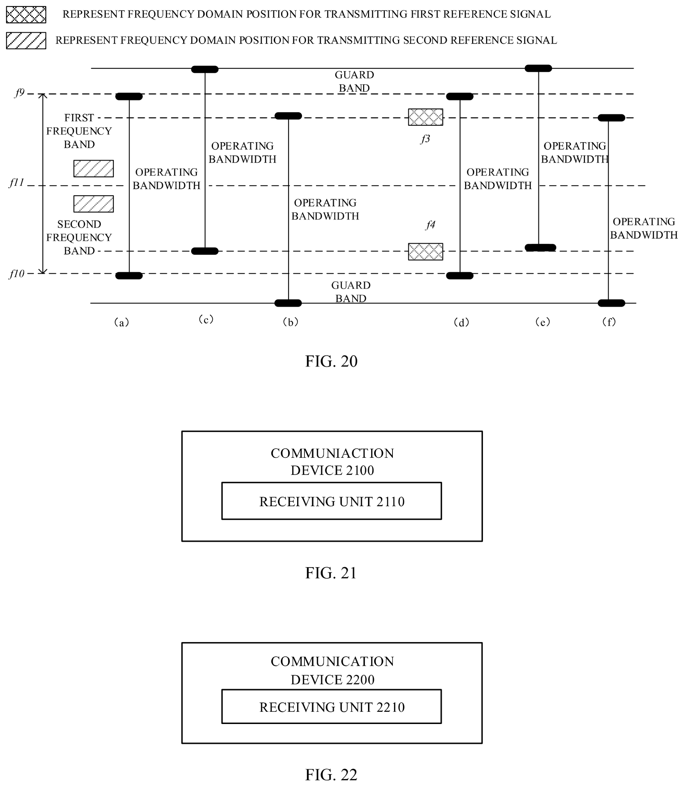

For ease of understanding, the following describes the methods for transmitting the first reference signal and the second reference signal in the embodiments of the disclosure with reference to FIG. 19 and FIG. 20. Specifically, FIG. 19 describes the case of transmitting one second reference signal, and FIG. 20 describes the case of transmitting two second reference signals.

As illustrated in FIG. 19, assume that the first bandwidth is the same as the second bandwidth, and the second bandwidth includes the frequencies between the lower-limit frequency *f9* and the upper-limit frequency *f10,* where the center frequency position of the second bandwidth is *f11.* Correspondingly, the center frequency position of the frequency domain position of the second reference signal can be the same as the center frequency position *f11.*

The following describes the process of transmitting the second reference signal with reference to (a) to (c) of FIG. 19.

As illustrated in (a) of FIG. 19, if no frequency offset occurs in the first device, the operating bandwidth of the filter is aligned with the second bandwidth, and the frequency band used for transmitting the second reference signal is within the operating bandwidth. In this case, after envelope detection, the output value of the first device can be used as a reference value.

As illustrated in (b) of FIG. 19, a positive frequency offset occurs in the first device, and the frequency band used for transmitting the second reference signal is within the operating bandwidth. In this case, after envelope detection, the output value of the first device can be a reference value.

As illustrated in (c) of FIG. 19, a negative frequency offset occurs in the first device, and the frequency band used for transmitting the second reference signal is within the operating bandwidth. In this case, after envelope detection, the output value of the first device can be used as a reference value.

The following describes the process of transmitting the first reference signal with reference to (d) to (f) of FIG. 19. The first frequency position *f3* and the second frequency position *f4* are respectively used to transmit the first reference signals: reference signal 1 and reference signal 2. The time domain position used for transmitting reference signal 1 is later than the time domain position of used for transmitting reference signal 2.

As illustrated in (d) of FIG. 19, if there is no frequency offset in the first device, the operating bandwidth of the filter is aligned with the first bandwidth. The frequency domain positions of reference signal 2 and reference signal 1 transmitted successively are within the operating bandwidth. In this case, after envelope detection, the output value of the first device is relatively high.

As illustrated in (e) of FIG. 19, if there is a positive frequency offset in the first device, during the transmission of the reference signal 2, the operating bandwidth of the filter cannot or cannot fully encompass the frequency band used for transmitting the reference signal 2. In this case, after envelope detection, the output value of the first device is less than the output value in the case of no frequency offset in the first device, that is, the output value of the first device is less than that in the case illustrated in (f) of FIG. 19. During the transmission of the reference signal 1, the operating bandwidth of the filter can contain the frequency band used for transmitting the reference signal 1. In this case, after envelope detection, the output value of the first device is similar to the output value in the case of no frequency offset, that is, the output value of the first device is similar to that in the case illustrated in (a) of FIG. 19.

As illustrated in (c) of FIG. 19, if there is a negative frequency offset in the first device, during the transmission of the reference signal 2, the operating bandwidth of the filter can encompass the frequency band used for transmitting the reference signal 2. In this case, after envelope detection, the output value of the first device is similar to the output value in the case of no frequency offset, that is, the output value of the first device is similar to the output value of the first device in the case illustrated in (a) of FIG. 19. During the transmission of the reference signal 1, the operating bandwidth of the filter cannot or cannot fully encompass the frequency band used for transmitting the reference signal 1. In this case, after envelope detection, the output value of the first device is less than the output value of the first device when no frequency offset occurs, that is, the output value of the first device is less than the output value of the first device in the case illustrated in (a) of FIG. 19.

As illustrated in FIG. 20, assume that the first bandwidth is the same as the second bandwidth, and the second bandwidth includes frequencies between the lower-limit frequency *f9* and the upper-limit frequency *f10,* where the center frequency position of the second bandwidth is *f11.* Correspondingly, the center frequency position of multiple continuous frequency bands for transmitting two second reference signals can be the center frequency position *f11.*

The following describes the process of transmitting the second reference signal with reference to (a) to (c) of FIG. 20.

As illustrated in (a) of FIG. 20, if no frequency offset occurs in the first device, the operating bandwidth of the filter is aligned with the second bandwidth, and the frequency band for transmitting the second reference signal is within the operating bandwidth. In this case, after envelope detection, the output value of the first device can be a reference value.

As illustrated in (b) of FIG. 20, a positive frequency offset occurs in the first device, and the frequency band used for transmitting the two second reference signals are within the operating bandwidth. In this case, after envelope detection, the output value of the first device can be a reference value.

As illustrated in (c) of FIG. 20, a negative frequency offset occurs in the first device, and the frequency band used for transmitting the two second reference signals are within the operating bandwidth. In this case, after envelope detection, the output value of the first device can be a reference value.

The following describes the process of transmitting the first reference signal with reference to (d) to (f) of FIG. 20. The first frequency position *f3* and the second frequency position *f4* are respectively used to transmit the first reference signals: reference signal 1 and reference signal 2. The time domain position used for transmitting reference signal 1 overlaps with the time domain position of used for transmitting reference signal 2 in the time domain.

As illustrated in (d) of FIG. 20, if there is no frequency offset in the first device, the operating bandwidth of the filter is aligned with the first bandwidth. The frequency domain positions of reference signal 1 and reference signal 2 are within the operating bandwidth. In this case, after envelope detection, the output value of the first device is relatively high.

As illustrated in (e) of FIG. 20, if there is a positive frequency offset in the first device, the operating bandwidth of the filter encompass the frequency band used for transmitting reference signal 1, but the operating bandwidth of the filter cannot or cannot fully encompass the frequency band used for transmitting the reference signal 2. In this case, after envelope detection, the output value of the first device is less than the output value in the case of no frequency offset in the first device, that is, the output value of the first device is less than that in the case illustrated in (d) of FIG. 20.

As illustrated in (f) of FIG. 20, if there is a negative frequency offset in the first device, the operating bandwidth of the filter encompasses the frequency band used for transmitting reference signal 2, but the operating bandwidth of the filter cannot or cannot fully encompass the frequency band used for transmitting the reference signal 1. In this case, after envelope detection, the output value of the first device is less than the output value in the case of no frequency offset in the first device, that is, the output value of the first device is less than that in the case illustrated in (d) of FIG. 20.

The above describes the transmission method of the second reference signal in the embodiments of the disclosure. The following will introduce the method of estimating frequency offset based on the reference value in the embodiments of the disclosure.

In some implementations, the first device performs envelope detection on the second reference signal to obtain the output value corresponding to the second reference signal (also referred to as the "reference value"). The first device performs envelope detection on the first reference signal to obtain the output value corresponding to the first reference signal. After that, the first device estimates the frequency offset based on the output value corresponding to the first reference signal and the output value corresponding to the second reference signal.

It should be noted that if the output value corresponding to the first reference signal is less than the output value corresponding to the second reference signal, it indicates the existence of a frequency offset. The output value corresponding to the first reference signal being less than the output value corresponding to the second reference signal may refer to that a difference between the output value corresponding to the first reference signal and the output value corresponding to the second reference signal is greater than a threshold.

If the output value corresponding to the first reference signal is similar to the output value corresponding to the second reference signal (or in other words, the difference is less than the threshold), it can be understood that there is no frequency offset or the frequency offset can be ignored. The output value corresponding to the first reference signal being similar to the output value corresponding to the second reference signal may refer to that the difference between the output value corresponding to the first reference signal and the output value corresponding to the second reference signal is less than the threshold.

In some implementations, the first device may adjust the frequency of the oscillator based on the estimated frequency offset, and receive the transmitted target signal based on the adjusted frequency.

In some implementations, the first device may adjust the frequency of the oscillator through multiple iterative processes. For example, the first device can adjust the frequency of the oscillator based on the estimated frequency offset, and set the operating bandwidth of the filter according to the adjusted frequency. After that, the first device enters the next iteration process, that is, the first device continues to perform the frequency offset estimation and adjust the frequency of the oscillator based on the first reference signal. In the embodiments, multiple iterations can help to adjust the frequency offset to a relatively low value.

In some implementations, if an iteration end condition is met, the first device may stop the iteration process. Embodiments of the disclosure are not limited in the iteration end condition. For example, the iteration end condition is used to indicate the maximum number of iterations in the iteration process. For another example, the iteration end condition for ending the iteration process includes that the output value corresponding to the first reference signal is similar to the output value corresponding to the second reference signal.

In the embodiments of the disclosure, in addition to the above method of frequency offset correction based on the reference value, the first device can also perform frequency offset correction only based on the output value corresponding to the first reference signal. In some implementations, during frequency offset estimation, the oscillator of the first device can continuously adjust the local frequency in a certain step size, so that the output value of the envelope detection for the received first reference signal reaches a certain target value. In this case, the process of frequency offset correction ends. The target value can be the maximum value to which multiple detection results converge.

For example, if the output value of the first device is relatively small after envelope detection, it can be determined that a frequency offset has occurred. In this case, the first device can try to perform positive frequency offset adjustment or negative frequency offset adjustment, and determine an appropriate frequency adjustment value based on the subsequent envelope detection results.

Method embodiments of the disclosure have been described in detail above with reference to FIG. 1 to FIG. 20. The following will elaborate apparatus embodiments of the disclosure with reference to FIG. 21 to FIG. 23. It should be understood that, apparatus embodiments and method embodiments correspond to each other. For parts not described in detail, reference can be made to the method embodiments.

FIG. 21 is a schematic diagram of a communication device in embodiments of the disclosure. A communication device 2100 illustrated in FIG. 21 can be the first device. The communication device 2100 may include a receiving unit 2110.

The receiving unit 2110 is configured to receive a first reference signal at a target frequency domain position within a first bandwidth. The first reference signal is used for frequency offset estimation. The target frequency domain position includes one or more of a first frequency domain position and a second frequency domain position. The first frequency domain position is within a first frequency band in the first bandwidth, where a frequency of the first frequency band is higher than a frequency domain of each frequency band other than the first frequency band in the first bandwidth. The second frequency domain position is within a second frequency band in the first bandwidth, where a frequency of the second frequency band is lower than a frequency domain of each frequency band other than the second frequency band in the first bandwidth.

In a possible implementation, when the target frequency domain position includes the first frequency domain position and the second frequency domain position, the first frequency domain position and the second frequency domain position overlap in a time domain, or the first frequency domain position and the second frequency domain position are staggered in the time domain.

In a possible implementation, when the target frequency domain position includes the first frequency domain position, the first frequency domain position and an upper-limit frequency of the first bandwidth are separated by a first frequency distance. Alternatively or additionally, when the target frequency domain position includes the second frequency domain position, the second frequency domain position and a lower-limit frequency of the first bandwidth are separated by a second frequency distance.

In a possible implementation, the first frequency distance and/or the second frequency distance are determined based on one or more the following parameters: frequency offset performance of the first device, and the frequency offset adjustment precision of the first device.

In a possible implementation, the frequency range of the first bandwidth is associated with one or more of the following: a capability of the first device, a type of the first device, and a bandwidth range of a target signal received by the first device.

In a possible implementation, the frequency offset estimation is used for the first device to receive a target signal, and the first bandwidth is different from a bandwidth for transmitting the target signal.

In a possible implementation, the communication device further includes a processing unit. The processing unit is configured to perform envelope detection on the first reference signal through a filter to obtain an output value corresponding to the first reference signal. The processing unit is further configured to perform frequency offset estimation based on the output value corresponding to the first reference signal.

In a possible implementation, the receiving unit is configured to receive a second reference signal within a second bandwidth, where the second reference signal is used to determine a reference value, and the reference value is used for the frequency offset estimation.

In a possible implementation, a frequency domain position of the second reference signal is determined based on a third frequency distance. The third frequency distance is associated with one or more of the following: a center frequency position of the second bandwidth, an upper-limit frequency position of the second bandwidth, and a lower-limit frequency position of the second bandwidth.

In a possible implementation, the third frequency distance includes one or more of the following: a frequency distance between the frequency domain position of the second reference signal and the center frequency position of the second bandwidth, a frequency distance between the frequency domain position of the second reference signal and the upper-limit frequency position of the second bandwidth, and a frequency distance between the frequency domain position of the second reference signal and the lower-limit frequency position of the second bandwidth.

In a possible implementation, the frequency domain position of the second reference signal is associated with an operating frequency band of a filter in the first device.

In a possible implementation, the first device contains multiple filters, and each of the multiple filters is configured to receive one second reference signal.

In a possible implementation, the time domain positions of second reference signals received by the multiple filters overlap in the time domain, or the time domain positions of the second reference signals received by the multiple filters are staggered in the time domain.

In a possible implementation, the second bandwidth is different from the first bandwidth, or the second bandwidth is the same as the first bandwidth.

In a possible implementation, the frequency domain position of the first reference signal is associated with an operating frequency band of a filter of the first device.

FIG. 22 is a schematic diagram of a communication device in embodiments of the disclosure. The communication device 2200 illustrated in FIG. 22 can be the second device. The communication device 2200 may include a sending unit 2210.

The sending unit is configured to send a first reference signal at a target frequency domain position within a first bandwidth. The first reference signal is used for frequency offset estimation. The target frequency domain position includes one or more of a first frequency domain position and a second frequency domain position. The first frequency domain position is within a first frequency band in the first bandwidth, where a frequency of the first frequency band is higher than a frequency domain of each frequency band other than the first frequency band in the first bandwidth. The second frequency domain position is within a second frequency band in the first bandwidth, where a frequency of the second frequency band is lower than a frequency domain of each frequency band other than the second frequency band in the first bandwidth.

In a possible implementation, when the target frequency domain position includes the first frequency domain position and the second frequency domain position, the first frequency domain position and the second frequency domain position overlap in a time domain, or the first frequency domain position and the second frequency domain position are staggered in the time domain.

In a possible implementation, when the target frequency domain position includes the first frequency domain position, the first frequency domain position and an upper-limit frequency of the first bandwidth are separated by a first frequency distance. Alternatively or additionally, when the target frequency domain position includes the second frequency domain position, the second frequency domain position and a lower-limit frequency of the first bandwidth are separated by a second frequency distance.

In a possible implementation, the first frequency distance and/or the second frequency distance are determined based on one or more of the following parameters: frequency offset performance of the first device, and frequency offset adjustment precision of the first device.

In a possible implementation, the frequency range of the first bandwidth is associated with one or more of: a capability of the first device, a type of the first device, and a bandwidth range of a target signal received by the first device.

In a possible implementation, the frequency offset estimation is used for the first device to receive a target signal, and the first bandwidth is different from a bandwidth for transmitting the target signal.

In a possible implementation, the sending unit is configured to send a second reference signal within a second bandwidth, where the second reference signal is used to determine a reference value, and the reference value is used for the frequency offset estimation.

In a possible implementation, a frequency domain position of the second reference signal is determined based on a third frequency distance, where the third frequency distance is associated with one or more of: a center frequency position of the second bandwidth, an upper-limit frequency position of the second bandwidth, and a lower-limit frequency position of the second bandwidth.

In a possible implementation, the third frequency distance includes one or more of: a frequency distance between the frequency domain position of the second reference signal and the center frequency position of the second bandwidth, a frequency distance between the frequency domain position of the second reference signal and the upper-limit frequency position of the second bandwidth, and a frequency distance between the frequency domain position of the second reference signal and the lower-limit frequency position of the second bandwidth.

In a possible implementation, a frequency domain position of the second reference signal is associated with an operating frequency band of a filter in the first device.

In a possible implementation, the first device contains multiple filters, and each of the multiple filters is configured to receive one second reference signal.

In a possible implementation, the time domain positions of second reference signals received by the multiple filters overlap in the time domain, or time domain positions of second reference signals received by the multiple filters are staggered in the time domain.

In a possible implementation, the second bandwidth is different from the first bandwidth, or the second bandwidth is the same as the first bandwidth.

In a possible implementation, the frequency domain position of the first reference signal is associated with an operating frequency band of a filter of the first device.

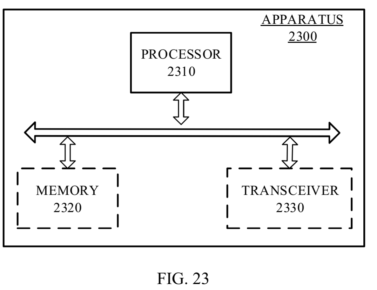

In an optional embodiment, the receiving unit 2110 may be a transceiver 2330. The first device 2100 may further include a processor 2310 and a memory 2320, as specifically illustrated in FIG. 23.

In an optional embodiment, the sending unit 2210 may be the transceiver 2330. The first device 2200 may further include the processor 2310 and the memory 2320, as specifically illustrated in FIG. 23.

FIG. 23 is a schematic structural diagram of a communication apparatus in embodiments of the disclosure. The dotted line in FIG. 23 indicates that the unit or module is optional. The apparatus 2300 can be used to implement the methods described in the above method implementations. The apparatus 2300 can be a chip, terminal device, or network device.

The apparatus 2300 may include one or more processors 2310. The processor 2310 can support the apparatus 2300 to implement the methods described in the previous method implementations. The processor 2310 can be a general-purpose processor or an application-specific processor. For example, the processor can be a central processing unit (CPU). Alternatively, the processor can also be other general-purpose processors, digital signal processors (DSP), application specific integrated circuits (ASIC), field programmable gate arrays (FPGA), or other programmable logic , discrete gate or transistor logic devices, and discrete hardware components, etc. The general-purpose processor can be a microprocessor or it can be any conventional processor, etc.

The apparatus 2300 may also include one or more memories 2320. Programs are stored on the memory 2320, and programs can be executed by the processor 2310, enabling the processor 2310 to execute the method described in the foregoing method implementations. The memory 2320 can be independent of the processor 2310 or integrated into the processor 2310.

The apparatus 2300 may also include a transceiver 2330. The processor 2310 can communicate with other devices or chips through the transceiver 2330. For example, the processor 2310 can transmit and receive data with other devices or chips through the transceiver 2330.

Embodiments of the disclosure also provide a computer-readable storage medium storing a program. The computer-readable storage medium can be applied to the terminal or network device provided in the embodiments of the disclosure, and the program enables a computer to execute the methods executed by the terminal or network device in various embodiments of the disclosure.

Embodiments of the disclosure provide a computer program product. The program product includes programs. The computer program product can be applied to the terminal or network device provided in the embodiments of the disclosure, and the program enables the computer to implement the operations performed by the network device in various methods in implementations of the disclosure.

Embodiments of the disclosure provide a computer program. The computer program product can be applied to the terminal or network device provided in the embodiments of the disclosure, and the program enables the computer to implement the operations performed by the network device in various methods in implementations of the disclosure.

It should be understood that, the terms "system" and "network" herein are used interchangeably throughout this disclosure. Additionally, the terms used in this disclosure are only for the purpose of explaining the specific embodiments of this disclosure, and are not intended to limit this disclosure. The terms "first", "second", "third", "fourth", etc. in the specification and claims of the disclosure and in the accompanying drawings are intended for distinguishing different objects rather than describing a particular order. In addition, the terms "include", "comprise", and "have" as well as variations thereof are intended to cover non-exclusive inclusion.

It should be understood that, "indication" referred to in implementations of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that that there is an association relationship between A and B.

In the embodiments of this disclosure, "B corresponding to A" means that B is associated with A, and B can be determined based on A. However, it should also be understood that determining B based on A does not mean determining B solely based on A. B can also be determined based on A and/or other information.

In the elaboration of implementations of the disclosure, the term "correspondence" may mean that there is a direct or indirect correspondence between the two, may mean that there is an association between the two, or may mean a relationship of indicating and indicated or configuring and configured, etc.

In implementations of the disclosure, the "pre-defined" or "pre-configured" can be implemented by pre-saving a corresponding code or table in a device (for example, including the terminal device and the network device) or in other methods that can be used for indicating related information, and the disclosure is not limited in this regard. For example, the "pre-defined" may mean defined in a protocol.

In implementations of the disclosure, the "protocol" may refer to a communication standard protocol, which may include, for example, an LTE protocol, an NR protocol, and a protocol applied to a future communication system, and the disclosure is not limited in this regard.

In implementations of the disclosure, the term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It should be understood that, in various implementations of the disclosure, magnitudes of sequence numbers of various operations are not intended to indicate an execution order, and the execution order of the operations should be determined by their functions and internal logic and shall not constitute any limitation on an implementation process of implementations of the disclosure.

It will be appreciated that the systems, apparatuses, and methods disclosed in implementations of the disclosure may also be implemented in various other methods. For example, the above apparatus implementations are merely illustrative, e.g., the division of units is only a division of logical functions, and other methods of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various implementations of the disclosure may be integrated into one processing unit or may be present as a number of physically separated units, and two or more units may be integrated into one.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A signal transmission method, comprising:
receiving, by a first device, a first reference signal at a target frequency domain position within a first bandwidth, the first reference signal being used for frequency offset estimation, wherein
the target frequency domain position comprises one or more of:
a first frequency domain position within a first frequency band in the first bandwidth, wherein a frequency of the first frequency band is higher than a frequency domain of each frequency band other than the first frequency band in the first bandwidth; and
a second frequency domain position within a second frequency band in the first bandwidth, wherein a frequency of the second frequency band is lower than a frequency domain of each frequency band other than the second frequency band in the first bandwidth.

2. The method of claim 1, wherein when the target frequency domain position comprises the first frequency domain position and the second frequency domain position,
the first frequency domain position and the second frequency domain position overlap in a time domain; or
the first frequency domain position and the second frequency domain position are staggered in the time domain.

3. The method of claim 1 or 2, wherein
when the target frequency domain position comprises the first frequency domain position, the first frequency domain position and an upper-limit frequency of the first bandwidth are separated by a first frequency distance; and/or
when the target frequency domain position comprises the second frequency domain position, the second frequency domain position and a lower-limit frequency of the first bandwidth are separated by a second frequency distance.

4. The method of any one of claims 1 to 3, wherein the first frequency distance and/or the second frequency distance are determined based on one or more of:
frequency offset performance of the first device; and
frequency offset adjustment precision of the first device.

5. The method of any one of claims 1 to 4, wherein a frequency range of the first bandwidth is associated with one or more of:
a capability of the first device;
a type of the first device; and
a bandwidth range of a target signal received by the first device.

6. The method of any one of claims 1 to 5, wherein the frequency offset estimation is used for the first device to receive a target signal, and the first bandwidth is different from a bandwidth for transmitting the target signal.

7. The method of any one of claims 1 to 6, further comprising:
performing, by the first device, envelope detection on the first reference signal through a filter, to obtain an output value corresponding to the first reference signal; and
performing, by the first device, frequency offset estimation based on the output value corresponding to the first reference signal.

8. The method of any one of claims 1 to 7, further comprising:
receiving, by the first device, a second reference signal within a second bandwidth, wherein the second reference signal is used to determine a reference value, and the reference value is used for the frequency offset estimation.

9. The method of claim 8, wherein a frequency domain position of the second reference signal is determined based on a third frequency distance, the third frequency distance being associated with one or more of:
a center frequency position of the second bandwidth;
an upper-limit frequency position of the second bandwidth; and
a lower limit frequency position of the second bandwidth.

10. The method of claim 9, wherein the third frequency distance comprises one or more of:
a frequency distance between the frequency domain position of the second reference signal and the center frequency position of the second bandwidth;
a frequency distance between the frequency domain position of the second reference signal and the upper-limit frequency position of the second bandwidth; and
a frequency distance between the frequency domain position of the second reference signal and the lower-limit frequency position of the second bandwidth.

11. The method of any one of claims 8 to 10, wherein a frequency domain position of the second reference signal is associated with an operating frequency band of a filter in the first device.

12. The method of claim 11, wherein the first device comprises a plurality of filters, and each of the plurality of filters is configured to receive one second reference signal.

13. The method of claim 12, wherein
time domain positions of second reference signals received by the plurality of filters overlap in the time domain, or
time domain positions of second reference signals received by the plurality of filters are staggered in the time domain.

14. The method of any one of claims 8 to 13, wherein the second bandwidth is different from the first bandwidth, or the second bandwidth is the same as the first bandwidth.

15. The method of any one of claims 1 to 14, wherein the frequency domain position of the first reference signal is associated with an operating frequency band of a filter in the first device.

16. A signal transmission method, comprising:
sending, by a second device, a first reference signal at a target frequency domain position within a first bandwidth, the first reference signal being used for frequency offset estimation, wherein
the target frequency domain position comprises one or more of:
a first frequency domain position within a first frequency band in the first bandwidth, wherein a frequency of the first frequency band is higher than a frequency domain of each frequency band other than the first frequency band in the first bandwidth; and
a second frequency domain position within a second frequency band in the first bandwidth, wherein a frequency of the second frequency band is lower than a frequency domain of each frequency band other than the second frequency band in the first bandwidth.

17. The method of claim 16, wherein when the target frequency domain position comprises the first frequency domain position and the second frequency domain position,
the first frequency domain position and the second frequency domain position overlap in a time domain; or
the first frequency domain position and the second frequency domain position are staggered in the time domain.

18. The method of claim 16 or 17, wherein
when the target frequency domain position comprises the first frequency domain position, the first frequency domain position and an upper-limit frequency of the first bandwidth are separated by a first frequency distance; and/or
when the target frequency domain position comprises the second frequency domain position, the second frequency domain position and a lower-limit frequency of the first bandwidth are separated by a second frequency distance.

19. The method of any one of claims 16 to 18, wherein the first frequency distance and/or the second frequency distance are determined based on one or more of:
frequency offset performance of the first device; and
frequency offset adjustment precision of the first device.

20. The method of any one of claims 16 to 19, wherein a frequency range of the first bandwidth is associated with one or more of:
a capability of the first device;
a type of the first device; and
a bandwidth range of a target signal received by the first device.

21. The method of any one of claims 16 to 20, wherein the frequency offset estimation is used for the first device to receive a target signal, and the first bandwidth is different from a bandwidth for transmitting the target signal.

22. The method of any one of claims 16 to 21, further comprising:
sending, by the second device, a second reference signal within a second bandwidth, wherein the second reference signal is used to determine a reference value, and the reference value is used for the frequency offset estimation.

23. The method of claim 22, wherein a frequency domain position of the second reference signal is determined based on a third frequency distance, the third frequency distance being associated with one or more of:
a center frequency position of the second bandwidth;
an upper-limit frequency position of the second bandwidth; and
a lower-limit frequency position of the second bandwidth.

24. The method of claim 23, wherein the third frequency distance comprises one or more of:
a frequency distance between the frequency domain position of the second reference signal and the center frequency position of the second bandwidth;
a frequency distance between the frequency domain position of the second reference signal and the upper-limit frequency position of the second bandwidth; and
a frequency distance between the frequency domain position of the second reference signal and the lower-limit frequency position of the second bandwidth.

25. The method of any one of claims 22 to 24, wherein a frequency domain position of the second reference signal is associated with an operating frequency band of a filter in the first device.

26. The method of claim 25, wherein the first device comprises a plurality of filters, and each of the plurality of filters is configured to receive one second reference signal.

27. The method of claim 26, wherein
time domain positions of second reference signals received by the plurality of filters overlap in the time domain, or
time domain positions of second reference signals received by the plurality of filters are staggered in the time domain.

28. The method of any one of claims 22 to 27, wherein the second bandwidth is different from the first bandwidth, or the second bandwidth is the same as the first bandwidth.

29. The method of any one of claims 16 to 28, wherein the frequency domain position of the first reference signal is associated with an operating frequency band of a filter in the first device.

30. A communication device, wherein the communication device is a first device and comprises:
a receiving unit configured to receive a first reference signal at a target frequency domain position within a first bandwidth, the first reference signal being used for frequency offset estimation, wherein
the target frequency domain position comprises one or more of:
a first frequency domain position within a first frequency band in the first bandwidth, wherein a frequency of the first frequency band is higher than a frequency domain of each frequency band other than the first frequency band in the first bandwidth; and
a second frequency domain position within a second frequency band in the first bandwidth, wherein a frequency of the second frequency band is lower than a frequency domain of each frequency band other than the second frequency band in the first bandwidth.

31. The communication device of claim 30, wherein when the target frequency domain position comprises the first frequency domain position and the second frequency domain position,
the first frequency domain position and the second frequency domain position overlap in a time domain; or
the first frequency domain position and the second frequency domain position are staggered in the time domain.

32. The communication device of claim 30 or 31, wherein
when the target frequency domain position comprises the first frequency domain position, the first frequency domain position and an upper-limit frequency of the first bandwidth are separated by a first frequency distance; and/or
when the target frequency domain position comprises the second frequency domain position, the second frequency domain position and a lower-limit frequency of the first bandwidth are separated by a second frequency distance.

33. The communication device of any one of claims 30 to 32, wherein the first frequency distance and/or the second frequency distance are determined based on one or more of:
frequency offset performance of the first device; and
frequency offset adjustment precision of the first device.

34. The communication device of any of claims 30 to 33, wherein a frequency range of the first bandwidth is associated with one or more of:
a capability of the first device;
a type of the first device; and
a bandwidth range of a target signal received by the first device.

35. The communication device of any one of claims 30 to 34, wherein the frequency offset estimation is used for the first device to receive a target signal, and the first bandwidth is different from a bandwidth for transmitting the target signal.

36. The communication device of any one of claims 30 to 35, further comprising:
a processing unit configured to perform envelope detection on the first reference signal through a filter to obtain an output value corresponding to the first reference signal, wherein
the processing unit is configured to perform frequency offset estimation based on the output value corresponding to the first reference signal.

37. The communication device of any one of claims 30 to 36, wherein the receiving unit is configured to:
receive a second reference signal within a second bandwidth, wherein the second reference signal is used to determine a reference value, and the reference value is used for the frequency offset estimation.

38. The communication device of claim 37, wherein a frequency domain position of the second reference signal is determined based on a third frequency distance, the third frequency distance being associated with one or more of:
a center frequency position of the second bandwidth;
an upper-limit frequency position of the second bandwidth; and
a lower-limit frequency position of the second bandwidth.

39. The communication device of claim 38, wherein the third frequency distance comprises one or more of:
a frequency distance between the frequency domain position of the second reference signal and the center frequency position of the second bandwidth;
a frequency distance between the frequency domain position of the second reference signal and the upper-limit frequency position of the second bandwidth; and
a frequency distance between the frequency domain position of the second reference signal and the lower-limit frequency position of the second bandwidth.

40. The communication device of any one of claims 37 to 39, wherein a frequency domain position of the second reference signal is associated with an operating frequency band of a filter in the first device.

41. The communication device of 40, wherein the first device comprises a plurality of filters, and each of the plurality of filters is configured to receive one second reference signal.

42. The communication device of 41, wherein
time domain positions of second reference signals received by the plurality of filters overlap in the time domain, or
time domain positions of second reference signals received by the plurality of filters are staggered in the time domain.

43. The communication device of any one of claims 37 to 42, wherein the second bandwidth is different from the first bandwidth, or the second bandwidth is the same as the first bandwidth.

44. The communication device of any one of claims 30 to 43, wherein the frequency domain position of the first reference signal is associated with an operating frequency band of a filter in the first device.

45. A communication device, wherein the communication device is a second device and comprises:
a sending unit configured to send a first reference signal at a target frequency domain position within a first bandwidth, the first reference signal being used for frequency offset estimation, wherein
the target frequency domain position comprises one or more of:
a first frequency domain position within a first frequency band in the first bandwidth, wherein a frequency of the first frequency band is higher than a frequency domain of each frequency band other than the first frequency band in the first bandwidth; and
a second frequency domain position within a second frequency band in the first bandwidth, wherein a frequency of the second frequency band is lower than a frequency domain of each frequency band other than the second frequency band in the first bandwidth.

46. The communication device of claim 45, wherein when the target frequency domain position comprises the first frequency domain position and the second frequency domain position,
the first frequency domain position and the second frequency domain position overlap in a time domain; or
the first frequency domain position and the second frequency domain position are staggered in the time domain.

47. The communication device of claim 45 or 46, wherein
when the target frequency domain position comprises the first frequency domain position, the first frequency domain position and an upper-limit frequency of the first bandwidth are separated by a first frequency distance; and/or
when the target frequency domain position comprises the second frequency domain position, the second frequency domain position and a lower-limit frequency of the first bandwidth are separated by a second frequency distance.

48. The communication device of any one of claims 45 to 47, wherein the first frequency distance and/or the second frequency distance are determined based on one or more of:
frequency offset performance of the first device; and
frequency offset adjustment precision of the first device.

49. The communication device of any of claims 45 to 48, wherein a frequency range of the first bandwidth is associated with one or more of:
a capability of the first device;
a type of the first device; and
a bandwidth range of a target signal received by the first device.

50. The communication device of any one of claims 45 to 49, wherein the frequency offset estimation is used for the first device to receive a target signal, and the first bandwidth is different from a bandwidth for transmitting the target signal.

51. The communication device of any one of claims 45 to 50, wherein the sending unit is configured to:
send a second reference signal within a second bandwidth, wherein the second reference signal is used to determine a reference value, and the reference value is used for the frequency offset estimation.

52. The communication device of claim 51, wherein a frequency domain position of the second reference signal is determined based on a third frequency distance, the third frequency distance being associated with one or more of:
a center frequency position of the second bandwidth;
an upper-limit frequency position of the second bandwidth; and
a lower-limit frequency position of the second bandwidth.

53. The communication device of claim 52, wherein the third frequency distance comprises one or more of:
a frequency distance between the frequency domain position of the second reference signal and the center frequency position of the second bandwidth;
a frequency distance between the frequency domain position of the second reference signal and the upper-limit frequency position of the second bandwidth; and
a frequency distance between the frequency domain position of the second reference signal and the lower-limit frequency position of the second bandwidth.

54. The communication device of any one of claims 51 to 53, wherein a frequency domain position of the second reference signal is associated with an operating frequency band of a filter in the first device.

55. The communication device of 54, wherein the first device comprises a plurality of filters, and each of the plurality of filters is configured to receive one second reference signal.

56. The communication device of 55, wherein
time domain positions of second reference signals received by the plurality of filters overlap in the time domain, or
time domain positions of second reference signals received by the plurality of filters are staggered in the time domain.

57. The communication device of any one of claims 51 to 56, wherein the second bandwidth is different from the first bandwidth, or the second bandwidth is the same as the first bandwidth.

58. The communication device of any one of claims 45 to 57, wherein the frequency domain position of the first reference signal is associated with an operating frequency band of a filter of the first device.

59. A communication device, comprising:
a transceiver;
a memory configured to store programs; and
a processor configured to invoke the programs stored in the memory and control the transceiver to receive or send signals, to cause the communication device to perform the method of any one of claims 1 to 29.

60. An apparatus, comprising a processor configured to invoke programs stored in a memory, to cause the apparatus to perform the method of any one of claims 1 to 29.

61. A chip, comprising a processor configured to invoke programs stored in a memory, to cause a device equipped with the chip to perform the method of any one of claims 1 to 29.

62. A computer-readable storage medium configured to store programs which are operable with a computer to perform the method of any one of claims 1 to 29.

63. A computer program product comprising programs which are operable with a computer to perform the method of any one of claims 1 to 29.

64. A computer program being operable with a computer to perform the method of any one of claims 1 to 29.
